# EUROPEAN PATENT SPECIFICATION

(11) **EP 3 433 411 B1**
(45) Date of publication and mention of the grant of the patent: **16.12.2020**
(21) Application number: 16714337.9
(22) Date of filing: 24.03.2016
(51) Int. Cl.: A47L 15/42, D06F 39/00, B01J 49/75, B01J 49/85, G01N 21/43, G01N 21/41

(54) **HOUSEHOLD WASHING MACHINE**
HAUSHALTSWASCHMASCHINE
MACHINE À LAVER DOMESTIQUE

(43) Date of publication of application: 30.01.2019
(73) Proprietor: Electrolux Appliances Aktiebolag, 105 45 Stockholm (SE)
(72) Inventor: BERTONI, Cristina, 33080 Porcia (PN) (IT); DEL MASCHIO, Federico, 33080 Porcia (PN) (IT); ARRIGONI, Giancarlo, 33080 Porcia (PN) (IT); CORAZZA, Flavio, 33080 Porcia (PN) (IT); TOPPANO, Michele, 33080 Porcia (PN) (IT); SOCAL, Angelo, 33080 Porcia (PN) (IT)
(74) Representative: Electrolux Group Patents
(86) International application number: PCT/EP2016/056546
(87) International publication number: WO 2017/162288

(56) References cited:
- EP-A1- 0 972 486
- EP-A1- 1 336 369
- WO-A1-2015/073165
- DE-A1- 2 911 366
- DE-A1- 10 204 002
- DE-A1- 19 825 981

## Description

The present invention relates to a household washing machine provided with a softener device, a container containing brine for regenerating the softener device, and an electro-optical apparatus configured to determine the concentration of the salt in a brine contained in said brine container.

More in particular, the present invention relates to a household washing machine such as a dishwashing machine or, in particular, but not solely, to a laundry washing machine, to which the following description refers purely by way of example without this implying any loss of generality.

As is known, household washing machines such as home laundry washing machines generally comprise a detergent dispenser which is located inside a boxlike casing, immediately above a washing tub, and is structured for selectively feeding into the washing tub, according to the washing cycle manually-selected by the user, a given amount of detergent, softener and/or other washing agent suitably mixed with fresh water arriving from a water mains.

This type of home laundry washing machine further comprises a fresh-water supply circuit which is structured for selectively drawing fresh water from the water mains and channelling said fresh water to the detergent dispenser or directly to the washing tub; and an appliance control panel which is generally located on the front wall of the casing, above the laundry loading/unloading opening, and is structured for allowing the user to manually select the desired washing-cycle.

In addition to the above, some type of laundry washing machines have an internal water softening device which is located along the fresh-water supply circuit, and is structured to selectively reduce the hardness degree of the fresh water channelled towards the detergent dispenser and the washing tub. The use of softened water during the washing cycle, in fact, significantly improves cleaning performances.

The water softening device is generally internally provided with a given amount of ion-exchange resins which are capable of retaining the calcium and magnesium ions (Ca++ and Mg++) dissolved in the water flowing through the same water softening device, so as to reduce the hardness degree of the fresh water directed towards the detergent dispenser and the washing tub.

Since the water softening capabilities of the ion-exchange resins are used to quickly drop away after a limited number of washing cycles, the laundry washing machines are generally provided with an internal reservoir of salt (NaCl) to be used for selectively producing some brine (i.e. salt water) which is periodically channeled into the water softening device to regenerate the ion-exchange resins located therein. Salt water, in fact, is able to remove from the ion-exchange resins the calcium and magnesium ions previously combined/fixed to said resins.

However the result of the regeneration of the ion-exchange resins depends on the salinity concentration of the brine supplied into the water softening device. In detail, when the salinity concentration of the brine is under a predetermined threshold, the regeneration process carried out with brine can be prejudiced.

Therefore, salinity concentration of the brine needs to be determined accurately time by time in order to assure an effective regeneration of the ion-exchange resins of the water softening device.

A device to detect the salinity concentration in a brine container of a household washing machine is known from DE 10 204 002 B4. In detail, the brine container is shaped in order to have a hollow vertical portion inside of which is mounted a float that is designed to move up and down in the internal space of the brine container portion according to the salinity concentration.

The device disclosed in DE 10 204 002 B4 further comprises an optical emitter and an optical receiver which are placed outside of the brine container in order to be faced to the outer opposite surfaces of the vertical portion. The optical emitter and the optical receiver are arranged one to the other in such a way that, in use, when brine salinity concentration falls below a desired salinity threshold, the float moves inside the vertical portion of the brine container in order to reach a prefixed position wherein it interrupts the beam path between the optical emitter and receiver.

Moreover, according to another embodiment disclosed in DE 10 204 002 B4, the brine container does not comprise the float, whereas positions of the optical receiver and of the optical emitter from the container walls are adjusted, during the assembling, on the basis of the salinity concentration to be detected.

The device disclosed in DE 10 204 002 B4 has the drawback to be time-consuming to be assembled because the optical emitter and optical receiver need to be mounted/positioned accurately one to the other, with a determined angle from the boundary outer surfaces of the brine container.

Indeed, as disclosed in DE 10 204 002 B4, the device requires a precise geometry of its components to operate correctly, i.e. emitter position, receiver position, and angles from the outer surfaces of the brine container.

In addition, during the operating i.e. the spin-cycles, the laundry machine is subjected to vibrations that cause the emitter and/or the receiver to mutually move from their initial positions. Due to such mutual movements, the detection precision of the device is reduced.

Moreover, the embodiments disclosed in DE0 10 204 002 are able only to detect whether the salinity concentration reaches a prefixed single value in order to signal that the salt should be refilled.

DE 10 204 002 further discloses an additional embodiment relating to a device which is able to determine the salinity concentration of the brine. According to such embodiment, the device comprises a plurality of receivers to detect the changes in the concentration of brine based on deviated/received radiation.

However such embodiment is complex and expensive to be performed because it needs a plurality of emitters-receivers which cause the device to be subjected to a worsening of the precision.

The aim of the present invention is to provide a simple and cheap device which is able to accurately determine the salinity concentration of the brine tank.

In compliance with the above aims, according to the present invention there is provided a household washing machine comprising: an outer casing, a washing tub which is placed inside said outer casing and is designed to accommodate items to be washed during a wash cycle, an internal water softening device comprising a water softening agent capable of reducing the hardness degree of a fresh water to be supplied to said washing tub during a washing cycle; a brine tank containing brine to be supplied to said water softening device for regenerating said water softening agent; said washing machine further comprising at least a sensor assembly, which is provided with at least an electro-optical sensor which is configured to determine the salinity of the brine contained in said brine tank; said electro-optical sensor comprises: a plug frame which is fitted into an opening formed on a wall of said brine tank, optical interface means which are associated with said plug frame and are shaped in order to be at least partially in contact with said brine contained in said brine tank, an emitting device for emitting a radiation beam, a receiving device for receiving said radiation beam, said emitting device and said receiving device being stably incorporated/placed in said plug frame in respective prefixed positions, one to the other, with respect to said optical interface means, said optical interface means being structured in order to be crossed by the radiation beam emitted from said emitting device and provide to the receiving device an amount of radiation beam which is indicative of the refraction index of the said brine; said electro-optical sensor further comprises electronic control means which are configured to receive an electrical signal from said receiving device being indicative of the refraction index of the brine and determine the salinity of the brine on the basis of said determined refraction index.

Preferably, said optical interface means comprise a waveguide body, which protrudes from said plug frame, across said opening, towards the internal space of said brine tank in order to extend at least partially in the internal space of brine tank.

Preferably, said waveguide body is optically coupled with said emitting device and said receiving device, said waveguide body has an outer contact surface immersed in the brine, is structured in order to receive the emitted radiation beam from said emitting device and provides the receiving device an amount of radiation beam which is not refracted across the brine and is indicative of the refraction index of the brine.

Preferably, said waveguide body comprises a solid semi-spherical calotte-shaped body.

Preferably, said waveguide body comprises a solid ogival-shaped body which extends along a longitudinal axis towards the internal space of said brine tank.

Preferably, said emitting device is designed to emit said radiation beam along a direction about parallel to said longitudinal axis.

Preferably, said emitting device and said receiving device are placed in a supporting surface of said plug frame and said waveguide body comprises a base surface which is stably fixed to said supporting surface of said plug frame in order to face the emitting device and the receiving device.

Preferably, wherein said waveguide body comprises a trimmed end which is opposite to said base surface along said axis, and has a substantially flat surface which lies in a plane perpendicular to said axis.

Preferably, wherein said waveguide body is made of a material being able to transmit radiation beam having prefixed frequencies and is characterised by a refraction index which causes said outer contact surface of the waveguide body, immersed in the brine, to reflect/refract the electromagnetic radiation towards said receiving device.

Preferably, wherein the waveguide body is made of polycarbonate or polypropylene.

Preferably, said optical interface means comprises two adjacent flat walls which are formed on said plug frame and faced to said photo emitting device and said photo receiving device respectively in order to separate the latter from the brine, and be crossed from said radiation beam.

Preferably, said adjacent flat walls lie on respective planes being perpendicular one to the other.

Preferably, said adjacent flat walls lie on respective planes inclined to said beam path so that the light emitted by the photo emitting device hits a flat wall with an angle greater than about 61°.

Preferably, said adjacent flat walls are formed in respective protrusions extending from said plug frame in order to be placed at least partially inside of the internal space of the brine tank.

Preferably, said emitting device and said receiving device are arranged inside of said protrusions.

Preferably, wherein said plug frame supports said photo emitting device and said photo receiving device so that the beam path from said photo emitting device to said photo receiving device remains outside of said brine tank wall, said plug frame further comprises a inner hollow seat which hydraulically communicates with the internal space of said brine tank for receiving a prefixed volume of brine and is formed in the body of the plug frame in order to be crossed by said beam path; said adjacent flat walls delimiting said inner seat.

Preferably, said electronic control means are further configured to determine the level of the brine contained in the brine tank based on the electric signal provided by said photo receiving device.

Preferably, the sensor assembly is associated with the brine tank along a portion corresponding to the predetermined brine level of the brine to be controlled/monitored.

Preferably, said sensor assembly comprise two electro-optical sensors which are associated with the brine tank along a portion corresponding to two predetermined brine levels of the brine to be controlled/monitored.

Preferably, said first electro-optical sensor is associated with the brine tank in order to determine whether the level of the water or brine stored inside brine tank is equal to or higher than a predetermined maximum threshold value, whereas a second electro-optical sensor is associated with the brine tank in order to determine whether the level of the water or brine stored inside brine tank is equal to or lower than a predetermined minimum threshold value.

Preferably, the washing machine according comprises a main electronic central control unit which is configured to: receive the salinity determined by the sensor assembly, and alert to the user a lack of salt and/or that refilling of salt is requested based on said received salinity.

Preferably, the washing machine according comprises a main electronic central control unit which is configured to: receive the salinity determined by the sensor assembly, and determine, on the basis of said determined salinity, whether the brine contained into said tank and designed to be supplied into the water softening device has a sufficient salinity degree to successfully perform the regeneration process of the ion-exchange resins contained into said water softening device.

Preferably, the washing machine according comprises a main electronic central control unit which is configured to: receive the determined salinity from the sensor assembly and calculate a regeneration duration of said water softening device based on the determined salinity.

Preferably, the washing machine according comprises salt compartment containing salt grains to be used in the regeneration process of said water softening device, and a main electronic central control unit which is configured to receive the determined salinity from the sensor assembly and determine, on the basis of the determined salinity, when the amount of salt grains stored into said compartment is depleting.

Preferably, the washing machine according comprises a salt compartment containing salt grains to be used in the regeneration process of said water softening device and a main electronic central control unit which is configured to receive the determined salinity from the sensor assembly and determine, on the basis of the determined salinity, when the salt grains in the said compartment form a compact block of salt difficult to be dissolved by the fresh water poured into the said compartment, and accordingly decide to stop or skip the regeneration process of said water softening device.

Preferably said salt compartment is structured for being manually fillable with a given quantity of salt grains and is fluidically communicates with said brine tank.

Preferably the washing machine comprises a main electronic central control unit which is configured to receive the determined salinity from the sensor assembly and determine, if the amount of salt to be supplied to said water softening device for regenerating the said water softening device is sufficient.

Preferably the washing machine comprises a rotatable drum housed in axially rotatable manner inside the washing tub and structured for housing the laundry to be washed, a detergent dispenser which is structured for supplying detergent into the washing tub, a fresh-water supply circuit which is structured for selectively channelling a flow of fresh water from the water mains towards said detergent dispenser and/or the washing tub, said internal water softening device being filled with said water softening agent capable of reducing the hardness degree of the fresh water directed towards the detergent dispenser or the washing tub, said brine tank comprising an internal space containing brine to be supplied, on command, to said water softening device for regenerating the said water softening device.

Preferably the washing machine comprises a one or more shelf or dish-rack baskets which are housed inside the washing tub and designed to to accommodate dishes to be washed during a washing cycle and one or more nozzles rotatably installed in respective sides of the wash chamber tub for spraying washing water through spraying holes.

Preferably, waveguide body comprises a solid ogival-shaped body presenting two flat sides lying in respective planes parallel one to the other and with the longitudinal axis of the body.

Preferably, said hollow seat comprise inferiorly an inner side downward inclined.

Preferably, said emitting device and said receiving device are stably incorporated/placed in said plug frame in order to not be aligned one to the other.

A non-limiting embodiment of the present invention will now be described, by way of example, with reference to the accompanying drawings, in which:
- Figure 1 is a perspective view of a household washing machine realized in accordance with the teachings of the present invention, with parts removed for clarity;
- Figures 2 is a side view of the Figure 1 laundry washing machine, with parts removed for clarity;
- Figure 3 is a perspective view of the detergent dispensing assembly of the Figure 1 laundry washing machine, with parts removed for clarity;
- Figure 4 is a schematic view of part of the hydraulic circuit of the Figure 1 laundry washing machine;
- Figure 5 is a schematic cross-section of part of the detergent dispensing assembly of the Figure 1 laundry washing machine, with parts removed for clarity;
- Figure 6 is perspective view of a brine tanks of the Figure 1 laundry washing machine, with parts removed for clarity;
- Figure 7 is a schematic partial longitudinal-section of a brine tanks provided with the sensor assembly made according to a first embodiment of the present invention;
- Figure 8 is a schematic partial longitudinal-section of a brine tanks provided with a electro-optical sensor of the sensor assembly made according to a first embodiment of the present invention;
- Figure 9 is a graph representing an example of a function which may be used to determine the salinity of the brine;
- Figure 10 is a schematic longitudinal-section of a part of the brine tanks provided with an electro-optical sensor of the sensor assembly made according to a second embodiment of the present invention;
- Figure 11 is a side view of a brine tanks provided with the electro-optical sensor illustrated in Figure 10;
- Figure 12 is a schematic perspective view of the electro-optical sensor of the sensor assembly made according to a third embodiment of the present invention;
- Figure 13 is a side view of a brine tanks provided with the electro-optical sensor illustrated in Figure 12.
- Figure 14 is a schematic vertical-section I-I of the electro-optical sensor of the sensor assembly made according to a third embodiment of the present invention;
- Figure 15 is a schematic horizontal section II-II of the electro-optical sensor of the sensor assembly made according to a third embodiment of the present invention;
- Figure 16 is a schematic vertical-section of a dishwashing machine realized in accordance with the teachings of the present invention, with parts in large scale and parts removed for clarity according to a first embodiment;
- Figure 17 is a schematic vertical-section of a dishwashing machine realized in accordance with the teachings of the present invention, with parts in large scale and parts removed for clarity according to a second embodiment;
- Figure 18 is a schematic vertical-section of a dishwashing machine realized in accordance with the teachings of the present invention, with parts in large scale and parts removed for clarity according to a third embodiment;
- Figure 19 is a schematic perspective view of a waveguide body of the electro-optical sensor made according to an embodiment of the present invention; whereas
- Figures 20 is a schematic partial longitudinal-section of electro optical sensors made according to an embodiment of the present invention.

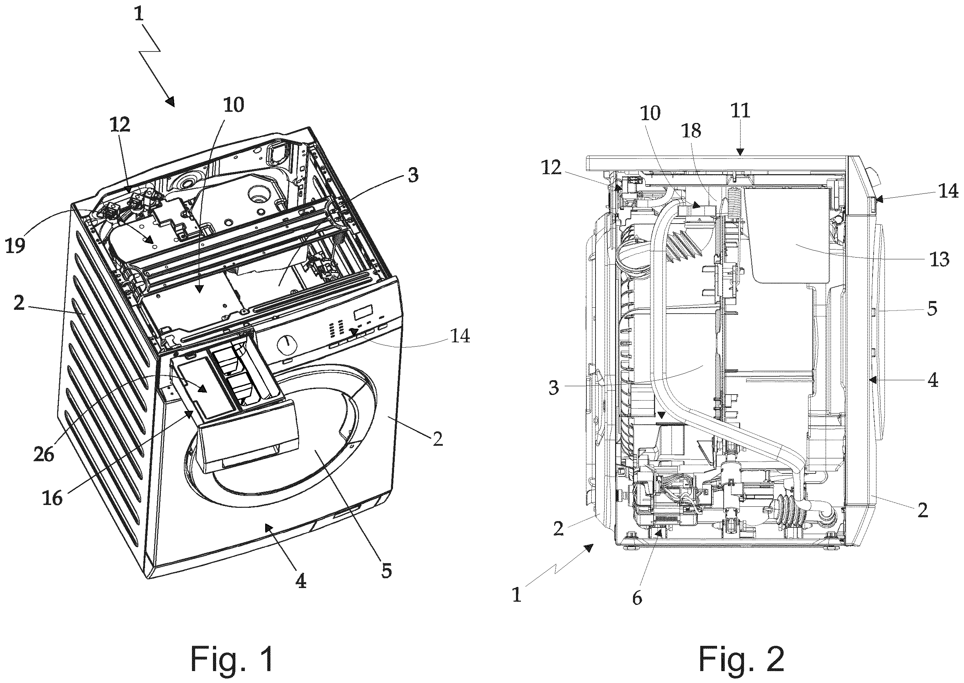

With reference to Figures 1, 2 and 3, reference number 1 indicates as a whole a laundry washing machine 1 which preferably basically comprises: a preferably substantially parallelepiped-shaped, outer boxlike casing 2 structured for resting on the floor; a preferably substantially horizontally-oriented, approximately cylindrical washing tub 3 which is arranged inside the casing 2 with the mouth directly facing a laundry loading/unloading pass-through opening realized in the front wall 4 of the outer casing 2; a substantially cylindrical, cup-shaped rotatable drum (not shown) which is structured for housing the laundry to be washed, and is fitted in axially rotatable manner inside the washing tub 3 with the concavity facing the front opening or mouth of washing tub 3, so as to be able to freely rotate about its longitudinal axis inside the washing tub 3; a porthole door 5 which is hinged to the front wall 4 of casing 2 so as to be movable to and from a closing position in which the door 5 closes the laundry loading/unloading opening on front wall 4 for watertight sealing the washing tub 4; and an electrically-powered motor assembly 6 which is structured for driving into rotation the rotatable drum (not shown) about its longitudinal axis inside the washing tub 3.

In the example shown, in particular, the rotatable drum (not shown) of laundry washing machine 1 is preferably arranged inside the washing tub 3 with the drum rotation axis locally substantially coaxial to the longitudinal axis of washing tub 3, i.e. oriented substantially horizontally, and with the circular front opening or mouth of the drum directly aligned and faced to the circular front opening or mouth of washing tub 3, so as to receive the laundry to be washed through the laundry loading/unloading opening realized on front wall 4.

With reference to Figures 1, 2, and 3, the laundry washing machine 1 furthermore comprises: a detergent dispenser 10 which is located inside the casing 2 preferably above the washing tub 3 and preferably, though not necessarily, immediately underneath the upper worktop or top wall 11 of casing 2, and is structured for selectively feeding into the washing tub 3, according to the washing cycle manually-selected by the user, a given amount of detergent, softener and/or other washing agent suitably mixed with fresh water; a main fresh-water supply circuit 12 which is connectable directly to the water mains, and is structured for selectively channelling, according to the washing cycle manually-selected by the user, a flow of fresh water from the water mains to the detergent dispenser 10 or directly to the washing tub 3; and an internal water softening device 13 which is located inside the boxlike casing 2, along the fresh-water supply circuit 12 or along the detergent dispenser 10, and is structured for selectively reducing, during each washing cycle, the hardness degree of the tap water that fresh-water supply circuit 12 channels towards the detergent dispenser 10 or the washing tub 3.

More in detail, the water softening device 13 basically consists in a closed container which has a water inlet and a water outlet fluidically connected to the fresh-water supply circuit 12 and/or the detergent dispenser 10 so as to be crossed by the tap water directed towards the washing tub 3, and which is furthermore filled with a given amount of ion-exchange resins capable of retaining the calcium and magnesium ions (Ca++ and Mg++) dissolved in the water flowing through the same container, so as to reduce the hardness degree of the tap water directed towards the washing tub 3.

In the examples shown, in particular, the water softening device 13 is preferably located inside the boxlike casing 2 adjoined to the detergent dispenser 10, and is preferably fluidically connected directly to detergent dispenser 10 so as to be crossed by the fresh water flowing towards the washing tub 3 via the same detergent dispenser 10.

With reference to Figure 1, in addition to the above, the laundry washing machine 1 preferably moreover comprises an appliance control panel 14 which is preferably located on front wall 4 of casing 2, above the laundry loading/ unloading opening and preferably also immediately beneath the upper worktop or top wall 11 of casing 2, and is structured to allow the user to manually select the desired washing cycle among a number of available washing cycles.

With reference to Figures 1-4, detergent dispenser 10 in turn basically comprises: a detergent drawer 16 which is provided with one or more substantially basin-shaped, detergent compartments 17 (three detergent compartments 17 in the example shown) each structured for being manually fillable with a given amount of detergent, softener or other washing agent, and which is fitted/inserted in manually extractable manner into a corresponding preferably substantially basin-shaped, drawer housing 18 which, in turn, is located/recessed inside the casing 2 above washing tub 3, and whose entrance is preferably located on front wall 4 of casing 2, above the laundry loading/unloading opening realized on the same front wall 4; and preferably a drawer flush circuit 19 which is connected to the fresh-water supply circuit 12, and is structured for selectively channelling/pouring, when the detergent drawer 16 is completely fitted/inserted into drawer housing 18, the fresh water of the water mains into any one of the detergent compartments 17 of detergent drawer 16 so as to selectively flush the detergent, softener or other washing agent out of the same detergent compartment 17 and down onto the bottom of drawer housing 18.

The drawer flush circuit 19, in turn, is preferably structured for directly pouring, when detergent drawer 16 is placed in the retracted position, a shower of water droplets by gravity selectively and alternatively into any one of the detergent compartments 17 of detergent drawer 16, so as to selectively flush the detergent, softener or other washing agent out of the same detergent compartment 17 and down onto the bottom of drawer housing 18.

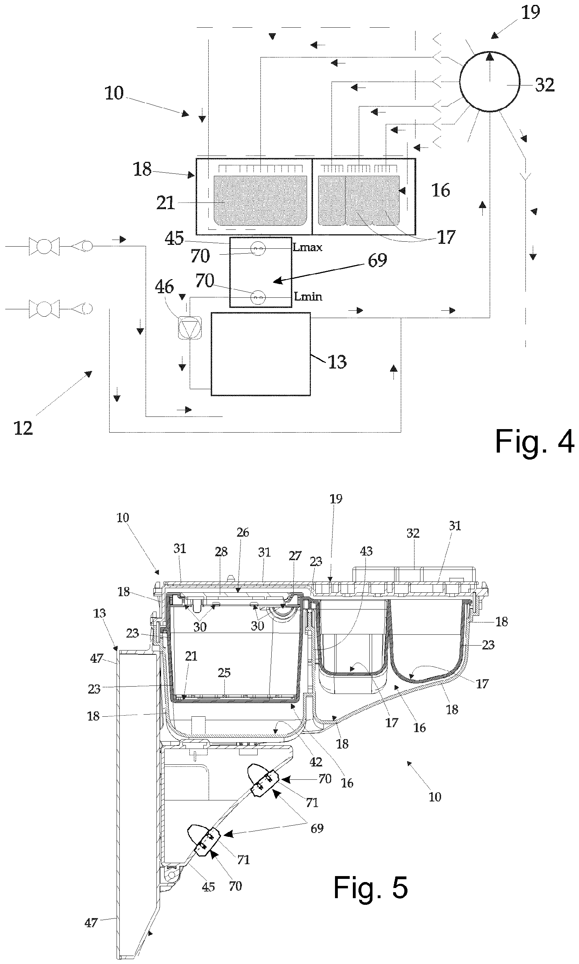

In addition to the above, with reference to Figure 4, detergent drawer 16 is preferably furthermore provided with a substantially basin-shaped, regeneration-agent compartment 21 which is located beside the one or more detergent compartments 17, and is structured for being manually fillable with a given quantity of salt grains (NaCl) or other regeneration agent suitable to be used in the regeneration process of the ion-exchange resins of the water softening device 13.

The drawer flush circuit 19, in turn, is preferably additionally structured for selectively channelling, when detergent drawer 16 is placed in the retracted position, the fresh water of the water mains also into the regeneration-agent compartment 21, so as to dissolve some of the salt grains contained into the same regeneration-agent compartment 21 and form brine (i.e. salt water).

More in details, the regeneration-agent compartment 21 is preferably arranged, on detergent drawer 16, beside the one or more detergent compartments 17, so that both detergent compartment/s 17 and regeneration-agent compartment 21 are allowed to almost contemporaneously come out from the front wall 4 of casing 2 when detergent drawer 16 moves from the retracted position to the extracted position.

Preferably the regeneration-agent compartment 21 is moreover dimensioned to accommodate/contain an amount of consumable salt (NaCl) or other regeneration agent sufficient for performing a plurality of regeneration processes of the ion-exchange resins of the water softening device 11. According to an exemplary embodiment the detergent drawer 16 preferably has, on the bottom of regeneration-agent compartment 21, a large pass-through draining opening which is suitably shaped/dimensioned to allow the brine (i.e. the salt water) formed inside the regeneration-agent compartment 21 to freely fall on the bottom of drawer housing 18.

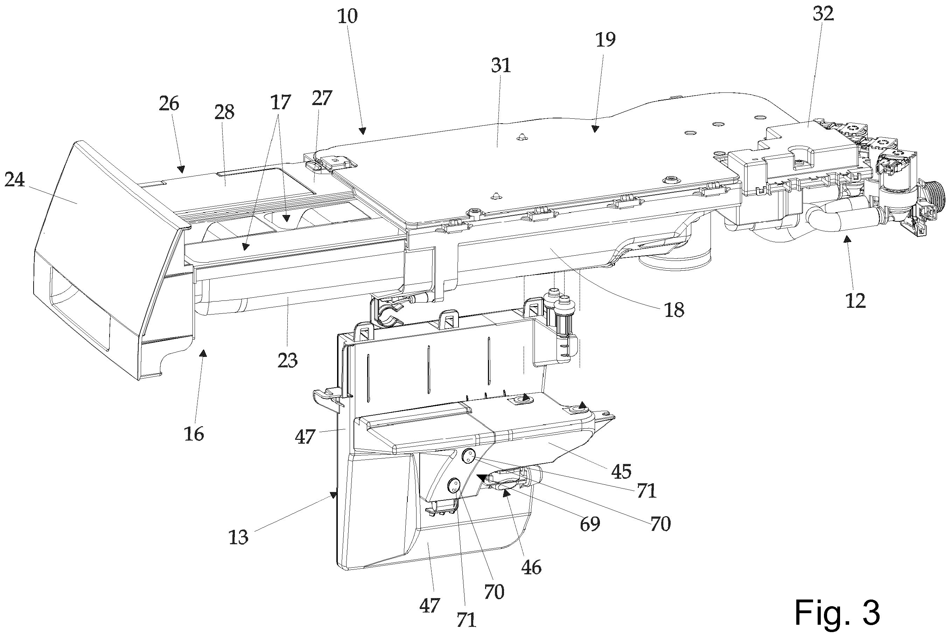

More in detail, with reference to Figures 3 and 5, in the example shown detergent drawer 16 preferably comprises: a drawer main body 23 which is preferably made in a one piece construction, and is fitted/inserted in axially sliding manner into the drawer housing 18; and a manually-sizable front panel 24 which is arranged/located on a front side of the drawer main body 23, so as to close the entrance of drawer housing 18 when detergent drawer 16 is placed in the retracted position.

With reference to Figures 3 and 5, the drawer flush circuit 19, in turn, is preferably directly connected to the fresh-water supply circuit 12 for receiving the fresh water of the water mains, and is suitably structured for selectively pouring/channelling, when the detergent drawer 16 is completely fitted/inserted into drawer housing 18, the fresh water arriving from the water mains into any one of detergent compartments 17 of detergent drawer 16, or into the regeneration-agent compartment 21 of detergent drawer 16.

In case of regeneration-agent compartment 21, the poured fresh water serves to dissolve some salt grains contained into the regeneration-agent compartment 21 to form the brine (i.e. the salt water) that falls on the bottom of drawer housing 18 via a pass-through opening.

The drawer flush circuit 19 is preferably structured to selectively channel, when detergent drawer 16 is placed in the retracted position, the fresh water of the water mains towards the water inlet of a lid assembly 26 which, in turn, is structured to distribute the fresh water arriving from drawer flush circuit 19 into the regeneration-agent compartment 21, so as to dissolve some of the salt grains (NaCl) contained into the regeneration-agent compartment 21 and form the brine that falls on the bottom of drawer housing 18 via opening.

With reference to Figure 3, in the example shown, in particular, the upper lid assembly 26 preferably comprises: a plate-like element 27 which is structured to rigidly fit into the upper rim of regeneration-agent compartment 21 to substantially completely cover/close the upper mouth of the regeneration-agent compartment 21; and a manually-movable trapdoor 28 which is arranged to close a preferably substantially rectangular-shaped, large pass-through opening which is preferably formed roughly at centre of plate-like element 27, and which is preferably suitably shaped/dimensioned to allow the user to easily manually pour the consumable salt (NaCl) or other regeneration agent into the regeneration-agent compartment 21.

The plate-like element 27 preferably has a hollow structure and is preferably provided with a water inlet which is suitably structured to watertight couple, when detergent drawer 16 is placed in the retracted position, with the drawer flush circuit 19 thus to allow the fresh water to enter into the plate-like element 27; and with one or more water-outlets 30 which are arranged on the lower face of plate-like element 27, preferably all around the central pass-through opening closed by trapdoor 28. Each water-outlet 30 allows the fresh water entered into the plate-like element 27 to slowly come out of plate-like element 27 and freely fall into the regeneration-agent compartment 21.

More in detail, with reference to Figures 3- 5, the drawer flush circuit 19 of detergent dispenser 10 preferably comprises an electrically-operated, water distributor 32 which is fluidically connected to the fresh-water supply circuit 12 and/or to the internal water softening device 13 for receiving a flow of unsoftened or softened fresh water, and is suitably structured to selectively channel the unsoftened fresh water arriving from fresh-water supply circuit 12 or the softened fresh water arriving from water softening device 13, towards any one of the water-delivery portions of a plate-like water conveyor 31.

The electrically-operated, water distributor 32, in turn, preferably consists in a discrete, electrically-operated, flow-diverter module which is firmly attached to the outside of plate-like water conveyor 31, at a coupling socket preferably realized on one of the two major faces of the same plate-like water conveyor 31.

The electrically-operated, flow-diverter module 32 preferably has a water inlet which directly communicates with the water softening device 13 for directly receiving softened fresh water, and preferably also with the fresh-water supply circuit 12 for also directly receiving unsoftened fresh water; and a number of water outlets which are located, preferably one side by side the other, at the interface portion of flow-diverter module 32 suited to couple with coupling socket of plate-like water conveyor 31.

Preferably the electrically-operated, flow-diverter module 32 furthermore internally accommodates a rotatable flow diverter (not shown) which is capable of channeling, according to its angular position, the water entering into flow-diverter module 32 via the water inlet towards any one of the water outlets of the same flow-diverter module 32.

With reference to Figures 3 and 5, the plate-like water conveyor 31, on the other hand, is provided with a number of water inlets which are separately fluidically communicate each with a respective water-delivery portion of the water conveyor 31 via a corresponding internal water channel extending inside the body of the same water conveyor 31.

The electrically-operated, flow-diverter module 32 is therefore structured to selectively channel, on command, the water entering into the flow-diverter module 32 via its water inlet towards any one of the water inlets of the plate-like water conveyor 31.

With reference to Figure 5, the basin-shaped bottom portion 42 vertically aligned to regeneration-agent compartment 21, is structured for receiving the brine (i.e. the salt water) trickling/falling down from the regeneration-agent compartment 21 via the pass-through opening, and directly fluidically communicates with the inside of a small brine tank 45 which is dimensioned to catch and contain a given amount of brine preferably greater than 100 ml (millilitres), and is arranged underneath the same basin-shaped bottom portion 42 so as to allow the brine to quickly fall/flow by gravity directly into the brine tank 45 and to accumulate therein.

Preferably said brine tank 45 furthermore fluidically communicates with the inside of the water softening device 13 via a small, electrically-powered pump assembly 46 which is capable of selectively pumping the brine (i.e. the salt water) accumulated into the brine tank 45, from brine tank 45 to water softening device 13, and preferably also to watertight isolate the brine tank 45 from the water softening device 13 when deactivated.

The laundry washing machine 1 therefore comprises: a regeneration-agent reservoir, i.e. the regeneration-agent compartment 21 of detergent drawer 16, which is located/recessed inside the casing 2 and is structured for being manually fillable with a given amount of consumable salt (NaCl) or other regeneration agent; a brine tank, i.e. brine tank 45, which is dimensioned to contain a given amount of brine preferably greater than 100 ml (millilitres) and fluidically communicates with said regeneration-agent reservoir for receiving and accumulating the brine (i.e. the salt water) coming out from said regeneration-agent reservoir; and preferably also a small, electrically-powered pump assembly 46 having the suction connected to the brine tank 45 and the delivery connected to the water softening device 13, thus to be able to selectively pump the brine (i.e. the salt water) from the brine tank 45 to the water softening device 13.

In the example shown, in particular, brine tank 45 is preferably dimensioned to contain a maximum amount of brine preferably overapproximating the whole amount of brine to be pumped into the internal water softening device 13 for performing the regeneration process of the ion-exchange resins located inside the same water softening device 13.

More in detail, assuming for example that the overall amount of brine to be pumped into the water softening device 13 for performing the whole regeneration process of the ion-exchange resins is preferably equal to 500 cm³ (cubic centimeters), brine tank 45 is preferably dimensioned to contain a maximum amount of brine preferably equal to 520 cm³ (cubic centimeters).

With reference to Figures 3-5, in the example shown, in particular, the water softening device 13 preferably comprises a substantially plate-like, discrete modular cartridge 47 which is provided with a water inlet and a water outlet, and is filled with a given amount of ion-exchange resins capable of retaining the calcium and magnesium ions (Ca++ and Mg++) dissolved in the water flowing through the same modular cartridge 47.

This modular cartridge 47 is preferably furthermore rigidly attached to a sidewall of drawer housing 18 preferably by means of one or more anchoring screws and/or one or more releasable mechanical couplings, so as to cantilevered extend downwards beyond the bottom of drawer housing 18 and next to brine tank 45, preferably while remaining locally substantially parallel and tangent to a vertical sidewall of the outer casing 2.

Preferably the water inlet and a water outlet of modular cartridge 47 are additionally fluidically connected to the plate-like water conveyor 31 preferably via appropriate hydraulic connectors, so that the modular cartridge 47 is selectively crossable by the unsoftened fresh water arriving from fresh-water supply circuit 12 and directed towards any one of the detergent compartments 17 or optionally towards the regeneration-agent compartment 21 of detergent drawer 16.

Brine tank 45, in turn, is preferably discrete from drawer housing 18, and is firmly attached directly to the bottom of drawer housing 18, preferably locally substantially vertically aligned to the basin-shaped bottom portion 42 and preferably by means of one or more anchoring screws and/or one or more releasable mechanical couplings. Preferably brine tank 45 is moreover adjacent to modular cartridge 47 and is preferably rigidly attached also to the same modular cartridge 47, preferably by means of one or more anchoring screws and/or one or more releasable mechanical couplings.

With reference to Figures 3 and 4, pump assembly 46, in turn, is preferably interposed between brine tank 45 and water softening device 13 so as to remain unmovably trapped between brine tank 45 and modular cartridge 47 when they are rigidly attached to one another.

According to an exemplary embodiment the pump assembly 46 may preferably basically comprise an electrically-powered membrane pump or other electrically-powered volumetric pump, which has the suction of the pump fluidically connected to brine tank 45 preferably via a first duckbill valve, so as to be able to suck the brine from the inside of brine tank 45, and the delivery of the pump fluidically connected to the modular cartridge 47 of water softening device 13 preferably via a second duckbill valve, so as to be able to feed the brine into the water softening device 13.

With reference to Figures 4-8, the laundry washing machine 1 furthermore comprises a sensor assembly 69, which is configured to determine/measure the salinity of the brine contained in the brine tank 45 according to the light refraction of the brine.

The sensor assembly 69 comprises at least an electro-optical sensor 70 which is provided with: a plug frame 71 which is designed to be associate with the brine tank 45, a photo emitting device 72 and a photo receiving device 73, which are stably fixed/incorporated/placed in the plug frame 71 in relative prefixed positions, one to the other.

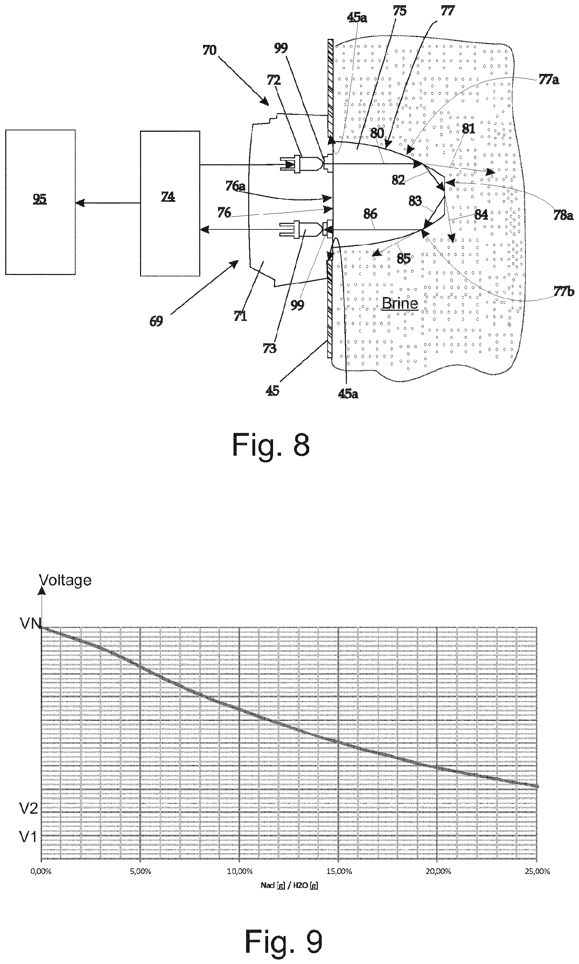

The electro-optical sensor 70 further comprises an electronic control device 74 (Fig 8), which is electrically connected to the emitting device 72 and is configured to provide an electrical control signal to control the emitting device 72 in order to cause the latter to emit a radiation beam having determined frequencies/intensities towards the brine contained in the brine tank 45.

Moreover, the electronic control device 74 is electrically connected to the photo receiving device 73 in order to receive from the latter an electrical signal containing an electric value associated with the radiation beam which has crossed the brine, and is configured to elaborate such received electrical signal/value in order to provide in turn, an electrical signal having an electric value being indicative of the salinity of the brine.

It is point out that hereinafter with the term salinity, it will be understood the salt concentration of brine. Preferably, the salt concentration may be expressed, for example, by a percentage value of the salt contained in a specific water volume, i.e. grams of salt in 100 grams of liquid (water).

According to the embodiments illustrated in Figures 4-8 and 10-13, the plug frame 71 may be made of a rigid or flexible material such as plastic material or any other similar material and is shaped in order to be directly fit, preferably in a substantially airtight and/or watertight manner, into a corresponding opening 45a formed on a side wall or a top wall of the brine tank 45. In the illustrated examples, the plug frame 71 is preferably shaped as a plate or a flange which is fitted in a opening 45a formed on a side wall of the brine tank 45. Thus the plug frame 71 closes the opening 45a in order to form a part of the wall of the brine tank 45 so as to delimit with the wall itself the internal space of the brine tank 45.

It is understood that the plug frame 71 can be inserted in any kind of brine tank 45 independently on the type of material the brine tank 75 is made of. Moreover the plug frame 71 can be inserted in any brine tank wall (bottom, top or side) depending on the application.

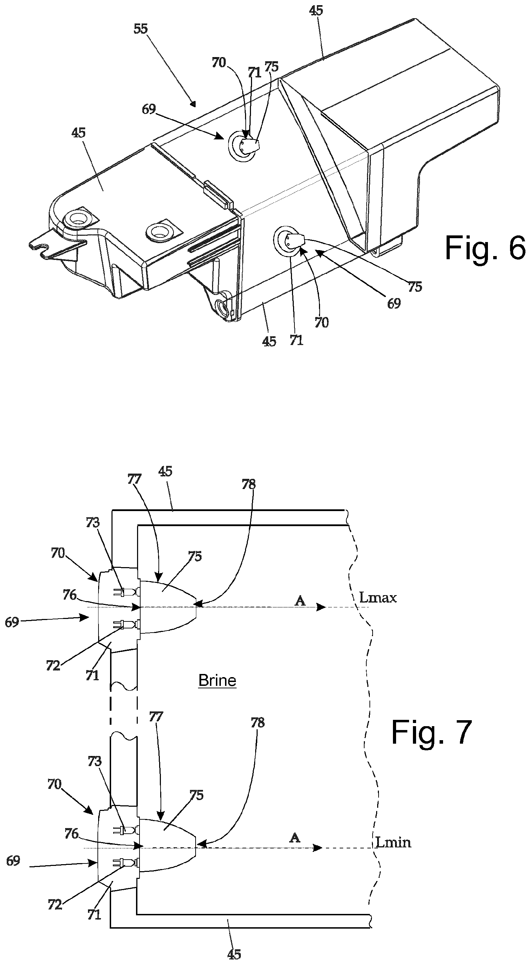

In the example illustrated in Figures 7 and 8, the emitting device 72 and the receiving device 73 are stably carried by, integrated in, the plug frame 71 in order to be mutually arranged in prefixed positions both of which lie in a plan (which for purely by way of example without this implying any loss of generality, in the example illustrated in Figures 7 and 8 is the plan of the sheet).

The Applicant has found that by stably fixing/integrating the emitting and the receiving devices 72, 73 in the plug frame 71, the following advantages are achieved: the sensor assembly 69 may be conveniently industrialised/produced separately from the brine tank 45 and it may be quickly assembled with the latter so that cost-saving is achieved. Furthermore, since the photo emitting device 72 and the photo receiving device 73 are stably fixed to the plug frame 71, their positions are not affected by machine vibrations. Thus initial accuracy of the sensor assembly 69 in determining the salinity is conveniently maintained.

The emitting device 72 may comprise a LED or the like, whereas the receiving device 73 may comprise a photodiode, i.e. IR emitting diode or a phototransistor, i.e. NPN phototransistor or any other similar semiconductor component. Preferably, the emitting device 72 and the receiving device 73 may comprise surface-mount-devices (SMD). Preferably, the emitting device 72 and photo receiving device 73 may be "analog sensors" designed to emit/receive radiation beam in any visible, infrared or ultraviolet wavelength.

The sensor assembly 69 further comprises optical interface means which are associated with the plug frame 71 and are shaped in order to be at least partially in contact with the brine contained in said brine tank 45, whereas, the emitting device 72 and the receiving device 73 are stably incorporated/placed in the plug frame 71 in respective prefixed positions, one to the other, with respect to said optical interface means. Optical interface means are structured in order to be crossed by the radiation beam emitted from the emitting device 72 and provide to the photo receiving device 73 an amount of radiation beam which is indicative of the refraction index of the said brine.

In accordance with a first embodiment illustrated in Figures 5, 6, 7 and 8, optical interface means of the electro-optical sensor 70 comprises a waveguide body 75 which is mechanically associated with the plug frame 71 and extends along a longitudinal axis A towards the internal space of brine tank 45.

The waveguide body 75 is defined by a protrusion having an outer contact surface, which is designed to be immersed in the brine. The waveguide body 75 is furthermore designed to be optically coupled with the emitting device 72 and the photo receiving device 73 in order to receive the emitted radiation beam from the photo emitting device 72 and provide to the receiving device 73 an amount of radiation beam which is not refracted across the brine and is therefore indicative of the refraction index of the brine.

Since the refraction index of the brine depends on its salinity and because the receiving device 73 provides an electrical signal based on the amount of radiation beam which is not refracted in the brine, i.e. it is associated with the refraction index of the brine, it follows that the electrical signal/value provided by the receiving device 73 is conveniently indicative of the brine salinity.

With regard to the example illustrated in Figures 7 and 8, the waveguide body 75 may comprise a semi-spherical calotte-shaped body, which is solid and cantilevered extends/protrudes from the plug frame 71 along the longitudinal axis A towards the internal space of brine tank 45 in order to be immersed in the brine.

Due to the outer curved surface of the waveguide body 75, the amount of the radiation beam received by the receiving device 73 varies in continue manner on the basis of the change of the refraction index of the brine, within a prefixed refraction index range. Since the refraction index of the brine varies on the basis of the salinity of the brine, the curved surface of the waveguide body 75 allows to perform a "continuous measure" of the salinity of the brine, when its salinity changes in a prefixed salinity range. In other words, the outer surface portion of the waveguide body 75 is designed to curve in order to include critical angles which are determined by the ratio between the optical interface material of the waveguide body 75 and the brine refractive indexes e.g. those corresponding to 0% up to saturation or those corresponding to the range of interest which is preferably from 10 up to 24% of salinity. This causes a progressive increase of the refracted light portion with respect to the radiation beam which is totally reflected and gets back to the receiving device 73 with the increasing salinity of the brine. This causes an increase of the refracted-to-received light ratio which represents the sensing phenomenon exploited to determine the refractive index changes occurring in the brine.

The Applicant has found that waveguide bodies which are completely prism-shaped are unsuitable to provide a "continue measure" of the salinity because their geometrical structure is only adapted to detect whether a single salinity value has been exceeded. In other words a prism-shaped waveguide is only adapted to cause the electro-optical sensor 70 to operate as a detector device, which detects when brine exceeds a single prefixed value. Indeed in a prism-shaped waveguide, when the salinity of the brine is greater than the prefixed value, i.e. a threshold, the radiation beam is completely refracted/dispersed in the brine due to the outer inclined flat surfaces of the prism. Consequently, the amount of radiation beam which reaches the photo receiving device has a radiating intensity insufficient for activating the latter and, in this condition, the electronic means determine that the salinity of brine is greater than the prefixed salinity value.

Preferably, the waveguide body 75 may be made of a material being able to transmit radiation beam having prefixed frequencies and characterised by a refraction index which causes the outer surface of the waveguide body 75 immersed in the brine, to reflect/refract the electromagnetic radiation towards the receiving device 73. Preferably, the waveguide body 75 may be made of a glass or plastic material, such as polycarbonate or polypropylene or any similar synthetic transmissive material.

With reference to examples illustrated in Figures 7 and 8, the waveguide body 75 may comprise a base surface 76 which is stably fixed to the plug frame 71 in order to face the emitting device 72 and the receiving device 73, and is optically coupled with the latter. Preferably, the base surface 76 may comprise a flat surface.

The waveguide body 75 further comprises a side surface 77 (Figures 7 and 8) which extends inside of the brine tank 45 in order to be immersed in the brine, and preferably, although not necessarily a trimmed end 78 which is opposite to the base surface 76 along the axis A and has a substantially flat surface. In the example illustrated in Figures 7 and 8, the base surface 76 and the trimmed end 78 preferably have flatten surfaces which are about parallel one the other and are substantially perpendicular to the axis A. Moreover, the trimmed end 78 if present may be coated with a reflective coating, such as a metallic coating like silver, providing enhanced sensitivity.

In the embodiment illustrated in Figure 8, the waveguide body 75 has a longitudinal-section (which for purely by way of example without this implying any loss of generality, in the example illustrated in Figure 8 lies on the mid plane - not illustrated - of the body 75) substantially in the form of a ogive having a base side 76a associated with the base surface 76, and preferably a cut/trimmed side 78a defined by the trimmed end 78, and two bend sides 77a, 77b i.e. curve-shaped sides, connecting the base side 76a to the cut/trimmed side 78a. According with an embodiment of the present invention, the waveguide body 75 may be shaped as an ogive which extends along the axis A and has a section circular, elliptic or similar, transversal to the longitudinal axis A, i.e. perpendicular to said mid plane.

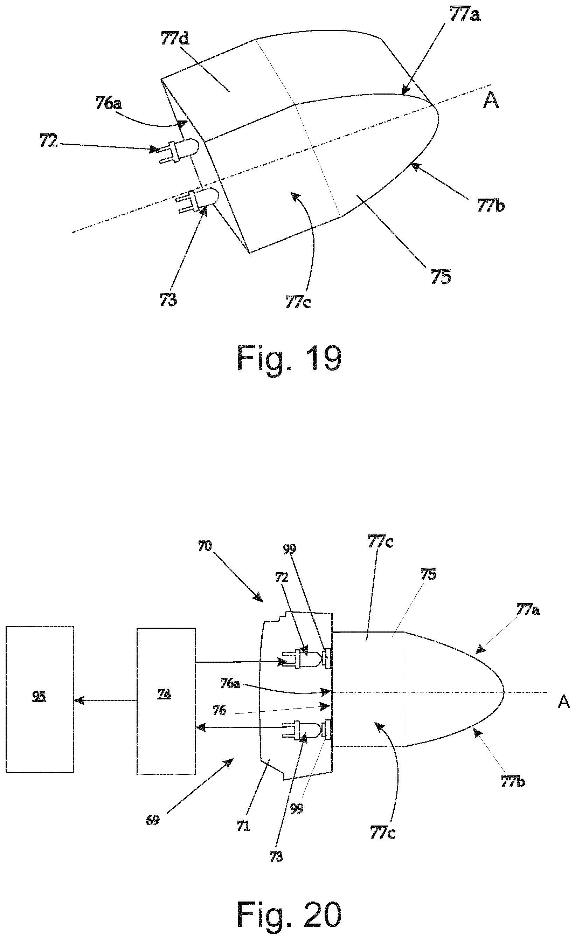

It is understood however that according to a different embodiment the ogival body of the waveguide body 75 may be shaped so as to comprise two flat sides 77c. According to the embodiment illustrated in Figures 19 and 20, flat sides 77c of the waveguide body 75 are arranged in respective opposite sides of the mid plane of the body 75 and lye in respective planes parallel one to the other and with the longitudinal axis A of the body 75. Preferably, flat sides 77c of the waveguide body 75 extend for the whole length of the body 75 from the base surface 76 and the opposite end. It is understood that waveguide body 75 made according to what illustrated in Figures 19 and 20 may preferably, although not necessarily comprise further said trimmed end 78.

Applicant has found that this embodiment is convenient. Indeed flat sides 77c of the waveguide body 75 allows to simplify the inner shape of the moulds to be used for producing the body waveguide 75. It follows that cost saving may be conveniently achieved with such simplified body 45.

Applicant has also found that by extending the waveguide body 75 along the axis A, the sensor can be adapted to measure salinity and level once plugged, for example, on the top side of the tank. In this regards, the waveguide body 75 may be shaped so as to comprise an extended intermediate circular- or parallelepiped-shaped portion, indicated with 77d in Figures 19 and 20 (which illustrate the parallelepiped-shaped solution), which is arranged between the base surface 76 and the ogival-shaped end portion faced, in turn, to the brine tank 45.

With reference to Figure 8, the photo emitting device 72 is arranged in order to emit the radiation beam towards the bend side 77a of the ogival portion of the waveguide body 75. The radiation beam entering the waveguide body 75, represented with 80 by its central axial ray, proceeds to the side surface 77 of the ogival portion where it is partially reflected towards the cut/trimmed side 78a, if present, and partially refracted/dispersed towards the brine. In other terms, a portion of the radiation beam, schematically represented with 81 by its central axial ray, is refracted/transmitted into the brine, whereas the remaining radiation beam schematically represented with 82 by its central axial ray, is reflected at the bend side 77a and remains within the waveguide body 75.

The remaining portion of the radiation beam 82 is in turn partially reflected by the cut/trimmed side 78a, schematically represented with 83 by its central axial ray, and partially refracted/dispersed in the brine, schematically represented with 84 by its central axial ray.

The remaining portion of the radiation beam 83 again proceeds towards the side surface 77. i.e. the bend side 77b of the waveguide body 75 (the bottom side schematically illustrated in Figure 8).

A portion of the radiation beam, schematically represented with 85 by its central axial ray, is refracted/dispersed in the brine, whereas the remaining radiation beam schematically represented with 86 is reflected towards the photo receiving device 73. The photo receiving device 73 generates an electric signal which corresponds to the amount of the portion of the radiation beam received from the bend side 77b of the waveguide body 75.

By virtue of the shape of the bend surface 77a of the ogival body which is the locus of points with tangent angles all critical angles relevant to the salinity range of interest and the appropriate alignment between the emitting device 72 and the said bend surface 77a, the emitted beam radiation hits the side surface 77 so that most of the incident beam is totally reflected and reaches the receiving device 73 at the lowest considered salinity level, e.g. 10% of salinity, and most of the incident beam is totally refracted and does not reach the receiving device 73 at the highest considered salinity level, e.g. saturation. This results in a maximization of the accuracy of the electro-optical sensor 70 response in the salinity range required in the laundry machine. Moreover, the distance between the trimmed end 78 and the base surface 76 is such that most of the radiation beam reflected at the bend surface 77a as a function of the actual brine refractive index, i.e. brine salinity, is conveniently substantially maintained inside of the waveguide body 75 and reaches the receiving device 73. Indeed, the trimmed end 78 performs an additional reflection which results in maintaining, during the beam reflections, an intensity of the radiation beam sufficiently high to cause the photo receiving device 73 to be able to provide an electrical signal containing the information about the refraction index and consequently the brine salinity.

In the examples illustrated in Figures 7 and 8, the electro-optical sensor 70 may further comprise collimating lens 99 which are arranged in order to optically couple the base surface 76 with the photo emitting device 72 and the photo receiving device 73. Preferably collimating lens 99 are structured to collimate the radiation beam emitted by the photo emitting device 72 in a prefixed emitting direction towards the bend surface 77a. Moreover collimating lens 99 are further structured to concentrate the radiation beam refracted/reflected inside the waveguide body 75 towards the photo receiving device 73 along a prefixed receiving direction. Preferably the emitting device 72 and the receiving device 73 are located on the same plane, next to each other and coupled to collimating lenses 99.

According to a possible embodiment, the electronic control device 74 may comprise electronic control circuits arranged in at least a control boards (PCB), which may be preferably, although not necessarily placed/incorporated in the plug frame 71.

Electronic control device 74 is able to determine/calculate the salinity in response to a linear and continue responses signals provided the receiving device 73 which may be conveniently an analogue sensor (no a detector/switch). In detail the analogue sensor may be configured to output a continue electric signal indicative of salinity, which varies based on variation of the salt concentrations of the brine within a salinity range comprised from a null salinity condition to a saturation condition .

In use, the electronic control device 74 is configured to: control the photo emitting device 72 for emitting the radiation beam towards the brine along the prefixed emitting direction across the ogival-shaped body; receive the electrical signal from the photo receiving device 73 being indicative of the refraction index of the brine contained in the brine tank 45, and determine the salinity of the brine on the basis of the determined refraction index. Preferably, the electronic control device 74 may implement a prefixed salinity function which univocally associates values of an electric quantity, i.e. the voltage/current of the electrical signal, to respective values of brine salinity. Figure 9 illustrates an example of a prefixed salinity function which could be implemented by the electronic control device 74 to determine the salinity of the brine based on the electric signal provided by the receiving device 73.

The prefixed salinity function may be determined/calibrated/obtained by laboratory tests, in which the electric magnitude of the electric signal provided by the photo receiving device 73 is determined/measured on the basis of samples of brine having different prefixed salinity. Indeed, during the tests, values of electric quantities, preferably the voltage, of the electrical signal generated by the photo receiving device 73 based on prefixed salinity of samples of brine may be stored in a look-up table contained in a memory of the electronic control device 74. It is pointed out that the tension values in said look-up table may be programmed in order to be associated with a prefixed range of salinity, preferably, for example, from 0% to saturation.

It is understood that the surface portion of the waveguide body 75, which is in contact with the brine and is in front of the collimating lenses 99 (and is hence reached by a collimated light beam) may be designed to curve in such a way that the emitting device's light rays reach the surface at angles higher than critical angles determined by the ratio between the optical interface material of the body 75 and the brine refractive indexes (e.g., those corresponding to 0 up to saturation or to about 10 up to about 24% salinity). This causes a progressive increase of the refracted light portion with respect to the light which is totally reflected and gets back to the receiving device. This translates in a increase of the refracted-to-received light ratio which represents the sensing phenomenon exploited to detect refractive index changes occurring in the brine.

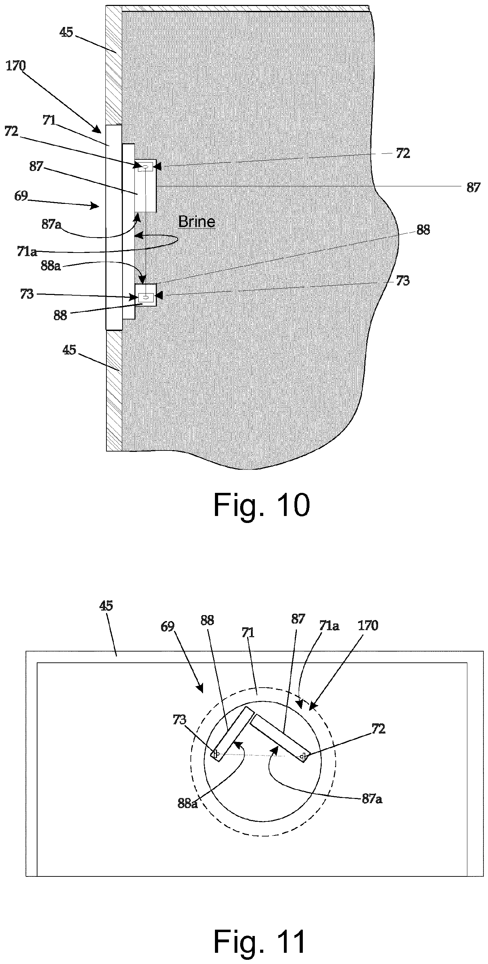

The example illustrated in Figures 10 and 11 relates to electro-optical sensor 170 which is similar to the plug electro-optical sensor 70 (illustrated in Figures 6-8), with the same reference numbers which identify corresponding parts of the electro-optical sensors 70.

According to a second embodiment illustrated in Figures 10 and 11, the photo emitting device 72 and the photo receiving device 73 of the electro-optical sensor 170 are placed in the plug frame 71 in order to be arranged inside of the brine tank 45 when the plug frame 71 is coupled with the brine tank 45 so that the radiation path from the photo emitting device 72 to the photo receiving device 73 crosses the internal space of the brine tank 45.

Preferably, the plug frame 71 comprises a plate-shaped base, which is stably associate with the brine tank 45, whereas the optical interface means may comprise two protrusions 87 and 88, which cantilevered extend from the inner surface 71a of the base of the plug frame 71 towards the internal space of brine tank 45 in order to be immersed in the brine. According to an exemplary embodiment illustrated in Figure 10 and 11, the protrusions 87 and 88 contain the photo emitting device 72 and the photo receiving device 73 respectively.

Protrusions 87 and 88 comprise respective external sidewalls 87a and 88a which separate the photo emitting device 72 and the photo receiving device 73 from the brine and when crossed by the radiation beam operates as an optical interface structure. It is pointed out that the cross-section of protrusions 87 and 88 may be of any kind except for their external sidewalls 87a and 88a which are placed in front of the photo emitting device 72 and the photo receiving device 73 and are preferably flat since they act as windows for the light. The characteristics of these flat external sidewalls 87a and 88a in terms of extension, thickness, roughness, etc. depend on the optical characteristics of the emitting and receiving devices (beam aperture, intensity, wavelength, etc.) as well as on their reciprocal distance and alignment. Preferably, the flat sidewalls 87a and 88a lies in respective plans which in the illustrated examples are perpendicular one to the other, and inclined/transversal to the radiation beam. Preferably the angle between the flat sidewalls 87a and the direction of the radiation beam emitted from the emitting device is greater than 60°with respect to the normal to the flat sidewalls 87a surface, preferably 61°. In this respect, Applicant has found that incident angles lower than 60° implies that output light undertakes total internal reflection and no light reaches the photo receiving device 73.

According to the example illustrated in Figures Figure 10 and 11, the emitting device 72 and the receiving device 73 are substantially aligned one to the other.

Preferably the receiving device 73 is approximately located near the axis/line identified by the direction of the collimated light emitted by the photo emitting device 72 with respect to the normal to the sidewall 87a. With this arrangement, the Applicant has found that an analog signal output at the photo receiver device 73 corresponding to the refracted-to-received light ratio variation caused by salinity changes occurring in the brine container 45 can be obtained.

However it should be pointed out that the sensitivity to the refracted-to-received light ratio at the receiving device 73 may conveniently be increased if the photo emitting device 72 is not aligned with the photo receiving device 73. Indeed, for a given incident angle of the light beam emitted by the photo emitter device 72 and higher than 60° with respect to the normal to the flat sidewalls 87a, the position of the photoreceiver 73 can be chosen so that it catches laterally the output light beam which deflects towards the flat sidewall 88a with the increasing salinity level inside the brine container 45 with the highest sensitivity, that is the highest variation in the refracted-to-received light ratio over the salinity range of interest.

The Applicant has found that this can be achieved by placing the photo receiver 73 at a certain distance from the position identified by the incident beam direction with respect to the normal to the flat sidewalls 87a. This distance must be derived by taking into account the actual output light beam's (i) exit point along the flat sidewalls 88a, (ii) direction with respect to the normal to the flat sidewall 88a at the lowest salinity level to be considered, (iii) optical aperture, (iv) actual output beam deflection occurring as a consequence of the brine salinity increase and (v) total internal reflection degree at the output sidewall 88a. This way, the photoreceiver 73 position can be chosen so to catch the largest possible variation in beam intensity with the increasing salinity level providing optimal sensitivity.

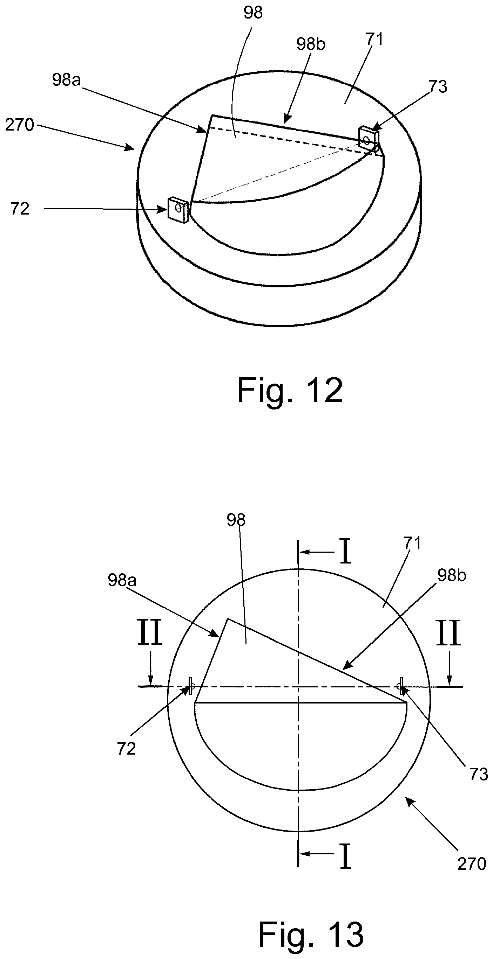

The example illustrated in Figures 12, 13, 14 and 15 relates to electro-optical sensor 270 which is similar to the plug electro-optical sensor 70 (illustrated in Figures 6-8), with the same reference numbers which identify corresponding parts of the electro-optical sensors 70.

According to the third embodiment illustrated in Figures 12, 13, 14 and 15, the plug frame 71 supports the photo emitting device 72 and the photo receiving device 73 outside of the brine tank 45 when the plug frame 71 is coupled with the brine tank 45, so that the radiation path from the photo emitting device 72 towards the photo receiving device 73 extends completely outside of the internal space of said brine tank 45. Preferably, the photo emitting device 72 and the photo receiving device 73 are supported by the plug frame 71 so that the radiation path extends completely outside of the side walls of the brine tank 45.

Preferably, the plug frame 71 is shaped so as to comprise a inner cavity or hollow seat 90, which is hydraulically connected with the internal space of said brine tank 45, in order to receive a prefixed volume of brine.

According to the third embodiment illustrated in Figures 12, 13, 14 and 15, the hollow seat 90 is defined by an inner brine sampling chamber which is formed in the plug frame 71, has an opening hydraulically connected with the internal space of the brine tank 45 through the opening 45a, and extends in the body of the plug frame 71 in order to be crossed by the radiation path completely outside of the brine tank 45.

According to the third embodiment illustrated in Figures 12, 13, 14 and 15, the plug frame 71 preferably comprises a plate-shaped base, which is stably associated with the brine tank 45, whereas the optical interface means comprises a protrusion 98, which cantilevered extends/protrudes from the outer surface of the base of the plug frame 71 in opposite direction to the brine tank 45. According to an exemplary embodiment illustrated in Figures 12 and 13, the photo emitting device 72 and the photo receiving device 73 are supported by the plug frame 71 in order to be placed outside of the protrusion 98. In this regards, the photo emitting device 72 and the photo receiving device 73 may be supported or arranged in a electronic board (not illustrated) structured to be coupled with the outer surface of the protrusion 98 in order to arrange the photo emitting device 72 and the photo receiving device 73 faced to two sidewalls 98a, 98b of the protrusion 98 delimiting at least partially the hollow seat 90.

Said two adjacent sidewalls 98a, 98b of the protrusion 98 separate the photo emitting device 72 and the photo receiving device 73 from the brine contained in the recess 90, and when crossed by the radiation beam, operates as an optical interface structure.

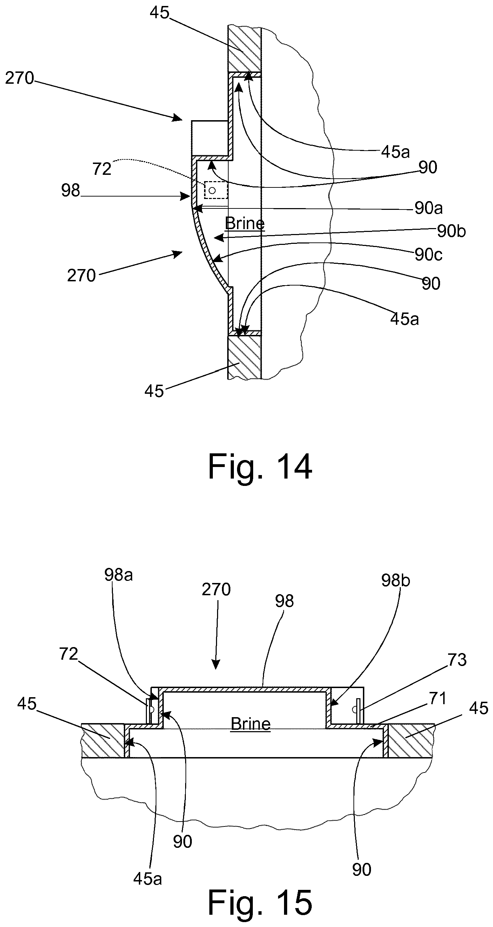

With regard to a preferred embodiment illustrated in Figure 14, the hollow seat 90 is formed on the body 75 in order to extend inside the protrusion 98. The hollow seat 90 is shaped in order to comprise an upper portion 90a, preferably, although not necessarily, a triangular shaped portion, arranged between said emitting device 72 and photo receiving device 73 so as to be crossed by the radiation beam, and a lower portion 90b which has inferiorly an inner side 90c inclined, i.e. downward slope, so as to conveniently cause the salt-drops, which tend to be formed on the inner surfaces of the hollow seat 90, to be drained downwards.

It is pointed out that the cross-section of protrusion 98 may be of any kind except for its inner sidewalls 98a and 98b which are placed in front of the photo emitting device 72 and the photo receiving device 73 and are preferably flat since they act as windows for the light/radiation beam. The characteristics of these flat inner sidewalls 98a, 98b in terms of extension, thickness, roughness, etc. depend on the optical characteristics of the emitting and receiving devices (beam geometrical aperture, intensity, wavelength, etc.) as well as on their reciprocal distance and alignment. According to a preferred embodiment illustrated in Figure 13, the flat sidewalls 98a and 98b lie in respective plans which are perpendicular one to the other, and inclined/transversal to the radiation beam. Applicant has found that by adopting a perpendicular positioning of the flat sidewalls 98a, 98b of the protrusion 98, and by adequately designing the positioning of the photo emitter 72 and photo receiver 73 it is possible to achieve (i) a decreasing analog output signal corresponding to the refracted-to-received light ratio which increases with the salinity level and (ii) an optimal sensitivity, that is the largest refracted-to-received light ratio variation to salinity changes occurring in the brine container 45. Preferably the sidewall 98a is formed on the plug frame 71 in order to be inclined to the emitting line/direction of the photo emitting element 72 at an angle greater than 60°, preferably greater than 61° with respect to the normal to the flat sidewall 98a.

Likewise the second embodiment illustrated in Figures 10 and 11, in Figures 12 and 13, the emitting device 72 and the receiving device 73 are substantially aligned one to the other, i.e. the direction of the collimated light emitted by the photo emitting device 72 is approximately coaxial with the receiving device 73.

Preferably, the photo receiver 73 may be placed next to the direction defined by the light beam entrance angle with respect to the normal to the sidewall 98a. With this arrangement, it is already possible to get an analog signal output at the photo receiver device 73 corresponding to the refracted-to-received light ratio variation caused by salinity changes occurring in the brine container 45.

However it should be pointed out that in the third embodiment illustrated in Figures 12-15, the sensitivity to the refracted-to-received light ratio at the receiving device 73 may be increased if the photo emitting device 72 is not aligned with the photo receiving device 73 as already illustrated for the second embodiment.

Likewise the first embodiment, the electronic control device 74 of the second and third embodiments is configured in order to: control the photo emitting device 72 for emitting the radiation beam along the prefixed emitting direction in order to cross the brine in the internal space of the brine tank 45 according to the second embodiment, or outside the brine tank 45 according to the third embodiment; receive the electrical signal from the photo receiving device 73 being indicative of the refraction index of the brine, and determine the salinity of the brine on the basis of the determined refraction index.

Likewise the first embodiment, the electronic control devices 74 of the second and third embodiments are configured in order to implement a prefixed salinity function which univocally associates values of an electric quantity, i.e. the voltage, of the electrical signal, to a relative value of brine salinity.

With reference to Figure 7, 10 and 12, preferably the sensor assembly 69 of the first, second and third embodiments may also be configured to further determine the salinity and the level of the brine contained in the brine tank 45. Preferably, the sensor assembly 69 is configured to determine a level condition where the brine inside of the brine tank 45 lies above a predetermined brine level.

To this end, the sensor assembly 69 may be associated with the brine tank 45 along a portion (i.e. vertically) corresponding to the predetermined brine level of the brine to be controlled/monitored.

Preferably, the electronic control device 74 may comprise a further look-up table comprising electric quantities, i.e. tension values, associated with the condition in which the sensor assembly 69 is in contact with air instead of brine.

In other words, the look-up table memorized in the electronic control device 74 may contain one or more electrical values which are associated with a refraction index of air. In this case, the electronic control device 74 determines that the brine inside of the brine tank 45 lies below the predetermined prefixed brine level when the electrical values provided by the receiving device 73 is indicative of the air refraction index.

It is evident that electronic control device 74 may be able to control the level also when the brine tank 45 contains water instead of brine.

With reference to the example illustrated in Figure 4, the sensor assembly 69 may comprise two electro-optical sensors 70 which are associated with the brine tank 45 along a portion corresponding to two predetermined brine levels of the brine to be controlled/monitored.

As illustrated in Figure 4, a first electro-optical sensor 70 may be associated with the brine tank 45 in order to determine whether the level of the water or brine (i.e. salt water) stored inside brine tank 45 is equal to or higher than a predetermined maximum threshold value Lmax, whereas a second electro-optical sensor 70 may be associated with the brine tank 45 in order to determine whether the level of the water or brine (i.e. salt water) stored inside brine tank 45 is equal to or lower than a predetermined minimum threshold value Lmin.

Figures 3, 4, 5, 6 and 7 illustrate an example wherein two electro-optical sensors 70 made according to the first embodiment, i.e. having the ogival-shaped waveguide body (preferably with the trimmed end 78) are associated with a sidewall of the brine tank 45 to determine whether the level of the water or the brine is equal or higher of the maximum threshold value Lmax and/or equal or lower than minimum threshold value Lmin.

It should be understood that although the Figures 3, 4, 5, 6 and 7 illustrate two electro-optical sensors 70 with reference to the first embodiment, use of the electro-optical sensors 70 made according to the second and/or third embodiment to determine the level of brine or water inside of the brine tank 45, is contemplated.

With reference to Figure 7, the electronic control device 74 may be further configured to provide the determined salinity to a main electronic central control unit 95 of the washing machine 1 which, in turn, determines whether the brine to be pumped into the water softening device 13 has a sufficient salinity degree to successfully perform the regeneration process of the ion-exchange resins contained into the water softening device 13, and furthermore a precise control of the amount of brine to be pumped into the water softening device 13.

The combination of electric signals relating to salinity and level arriving from the sensor assembly 69 in fact, causes the main electronic central control unit 95 of the laundry washing machine 1 to be able to determine whether salinity degree and/or the amount of the brine contained into brine tank 45 are sufficient for successfully performing the regeneration process of the ion-exchange resins.

In addition to the above, the sensor assembly 69 causes the main electronic central control unit 95 of the laundry washing machine 1 to control the time of the regeneration process based on the determined salinity. Preferably, if the determined salinity is high, i.e. greater than a prefixed maximum salinity threshold, the main control unit 95 may decrease the regeneration time of a corresponding prefixed time, whereas in the opposite case, if the determined salinity is very low, i.e. lower than a prefixed minimum salinity threshold, the main control unit 95 may increase the regeneration time of a respective prefixed time.

In addition to the above, the sensor assembly 69 may cause the main electronic central control unit 95 of the laundry washing machine 1 to determine when the regeneration process should be performed, based on the determined regeneration time. For example, the electronic control device 74 may compare the determined time of the regeneration process with the duration of one or more determined washing phases of the selected washing program and, according with results, set one or more washing phase/s during which the regeneration process has to be performed.

In addition to the above, the sensor assembly 69 causes the main electronic central control unit 95 of the laundry washing machine 1 to indirectly determine when the amount of salt grains (NaCl) stored preferably into regeneration-agent compartment 21 is depleting, and decide to stop or skip the regeneration process of the ion-exchange resins based on such condition. A low salinity degree of the brine contained in brine tank 45, in facts, means that either the amount of salt grains (NaCl) preferably stored into regeneration-agent compartment 21 is depleting.

Moreover, the sensor assembly 69 causes the main electronic central control unit 95 of the laundry washing machine 1 to indirectly determine on the basis of determined salinity/level, when the salt grains preferably in the regeneration-agent compartment 21 form a big and compact block of salt difficult to be dissolved by the fresh water poured into the regeneration-agent compartment 21, and accordingly decide to stop or skip the regeneration process of the ion-exchange resins. A low salinity degree of the brine contained in brine tank 45, in facts, may also mean that fresh water poured preferably into the regeneration-agent compartment 21 is unable to successfully dissolve a sufficient amount of salt grains in the regeneration-agent compartment 21.

In addition to the above, the sensor assembly 69 causes the main electronic central control unit 95 of the laundry washing machine 1 to timely alert the user that refilling of salt grains (NaCl) preferably into regeneration-agent compartment 21 is requested. The main electronic control unit 95, in fact, may activate a warning light (not illustrated) located on control panel 14 or other warning device, such as for example a buzzer, when sensor assembly 69 determine, either for the first time or after a given number of consecutive times, a low salinity degree conditions.

Sensor assembly always ensures a complete regeneration of the ion-exchange resins which increases the efficiency of the laundry washing machine 1.

Experimental tests, in fact, revealed that a complete regeneration of the ion-exchange resins takes place only if the percentage of salt dissolved into the brine is higher than a given minimum value. Moreover the residence time of the brine inside the water softening device 13 for achieving a complete regeneration of the ion-exchange resins is inversely proportional to the salinity degree of the brine. In other words, a brine having a high salinity degree is capable of regenerating the ion-exchange resins in less time.

Furthermore sensor assembly allows a precise metering of the amount of water supplied into brine tank and into water softening device, thus significantly reducing the overall water consumption of the laundry washing machine.

Last, but not least, sensor assembly allows to timely alert the user that refilling of salt grains (NaCl) into regeneration-agent compartment is requested.

Although the sensor assembly above disclosed has proved to be particularly advantageous when applied to the brine tank of a laundry washing machine, it can be conveniently applied to a brine tank of a dishwashing machine.

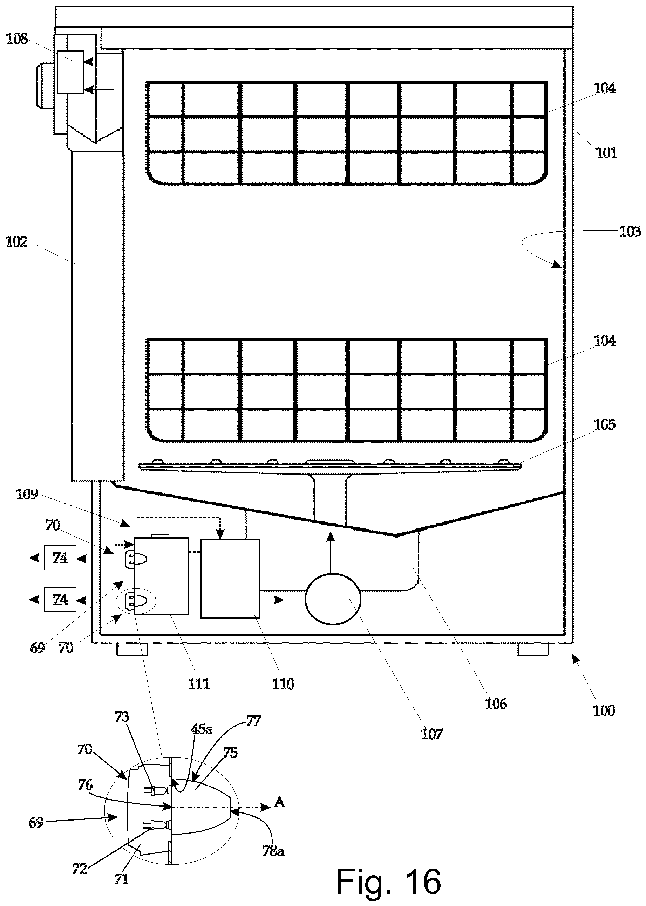

In this regard, Figures 16, 17 and 18 illustrate schematically a program-controlled household dishwashing machine 100 comprising a box-shaped, preferably, though not necessarily, parallelepiped-shaped outer casing 101 having an opening at a front side; a door 102 openably installed on the front side of the outer casing 101; a washing chamber 103 installed inside the outer casing 101 for washing dishes; one or more shelf or dish-rack baskets 104 which are housed inside the wash chamber 103 and designed to to accommodate dishes to be washed during a washing cycle. Dish - rack baskets 104 rests on known runners (not shown) by which to pull the baskets out drawer-fashion through access opening to wash chamber 103.

Household dishwashing machine 100 further comprises one or more nozzles 105 (only one illustrated) rotatably installed in respective sides (upper and bottom) of the wash chamber 103 for spraying washing water through spraying holes; a sump 106 formed on a lower side of the washing chamber 103 for collecting washing water; a washing pump 107 for pumping washing water through the nozzle 105; and a main control unit 108 installed inside the outer casing 102, for controlling an operation of the dishwashing machine 100.

At a lower side of the washing chamber 103, the dishwashing machine 100 may preferably comprise: a heater (not shown) for heating washing water supplied to the inside of the sump 106; a water supplying system 109 which supplies wash water to the spray arms of nozzles 105 via the pump 107 during washing cycles.

Water supplying system 109 in dishwashing machines 100 comprises water lines/pipes and valve-controlled water connections which are known and therefore will be not illustrated/disclosed in detail.

Dishwashing machine 100 further comprises a water softening device 110 comprising a water softening agent capable of reducing the hardness degree of a fresh water designed to be supplied to the washing chamber 103 during a washing cycle; and a brine tank 111 containing brine to be supplied to the water softening device 113 for regenerating said water softening agent.

Preferably, the water softening device 110 may comprise a closed container located along one or more lines/pipes of the water supplying system 109 so as to be crossed by the tap water to be softened, and which is furthermore filled with a given amount of ion-exchange resins capable of retaining the calcium and magnesium ions (Ca++ and Mg++) dissolved in the water flowing through the same container, so as to reduce the hardness degree of the received tap water.

With regards to the brine tank 111, it fluidically communicates with the water softening device 113 in order to supply, preferably, although not necessarily, on command, the brine to the latter so as to regenerate the ion-exchange resins.

Dish washing machine 100 illustrated in Figure 16 further comprise the sensor assembly 69 which is associated with the brine tank 111 to determine/measure the salinity and/or the level of the brine contained in the brine tank 111.

The sensor assembly 69 may comprise one or more electro-optical sensors 70, 170, 270 which are associated to the brine tank 111 and are identical to the electro-optical sensor 70, 170 e 270 respectively, as above disclosed according to the first, second and third embodiments illustrated in Figures 7-13.

The example illustrated in Figure 16 relates to a dishwashing machine 100 wherein the sensor assembly 69 comprises at least one electro-optical sensor 70 (two illustrated in the example of Figure 14) which is identical to the plug electro-optical sensor 70 (illustrated in Figures 7-9) made according to the first embodiment and the component parts of which will be indicated, with the same reference numbers which identify corresponding parts of the electro-optical sensors 70.

The electro-optical sensor 70 is essentially provided with: the plug frame 71 which is designed to be associate with a the side wall of the brine tank 111, the photo emitting device 72, the photo receiving device 73, which are stably fixed/incorporated/placed in the plug frame 71 in relative prefixed positions, one to the other, and optical interface means which are permanently associated with the plug frame 71 and are shaped in order to be at least partially in contact with the brine contained in said brine tank 45

The optical interface means comprises the waveguide body 75 which is permanently associated with the plug frame 71 and extends along a longitudinal axis A towards the internal space of brine tank 45. The waveguide body 75 is designed in order to have an outer contact surface, which is designed to be immersed in the brine. The waveguide body 75 is furthermore designed to be optically coupled with the photo emitting device 72 and the photo receiving device 73 in order to receive the emitted radiation beam from the photo emitting device 72 and provide to the photo receiving device 73 an amount of radiation beam which is not refracted across the brine and is therefore indicative of the refraction index of the brine. With regard to the example illustrated in Figure 14, the waveguide body 75 may comprise a semi-spherical calotte-shaped body, or an ogival shaped body which is solid and cantilevered extends/protrudes from the plug frame 71 along the longitudinal axis A towards the internal space of brine tank 111 in order to be immersed in the brine.

According to the example illustrated in Figure 16, the waveguide body 75 comprises: a base side 76 which is stably fixed to the plug frame 71 in order to face the emitting device 72 and the receiving device 73 and is optically coupled with the latter through collimating lenses 99 if needed, a side surface 77 which extends inside of internal space of brine tank 111, and preferably, although not necessarily, a trimmed end 78 which is opposite to the base surface 76 along the axis A and has a substantially flat surface.

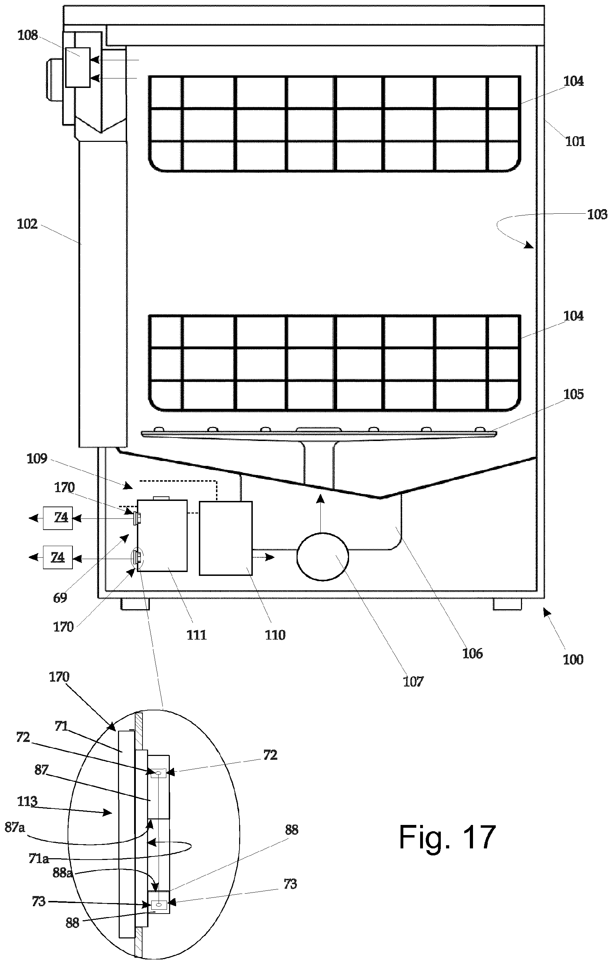

The example illustrated in Figure 17 relates to a dishwashing machine 100 wherein the sensor assembly 69 comprises at least one electro-optical sensor 170 (two illustrated in the example of Figure 15) which is identical to the plug electro-optical sensor 170 (illustrated in Figures 10-11) made according to the second embodiment and the component parts of which are indicated, with the same reference numbers which identify corresponding parts of the electro-optical sensor 170.

Preferably, emitting device 72 and the photo receiving device 73 of the electro-optical sensors 170 are placed in the plug frame 71 in order to be arranged inside of the brine tank 111 when the plug frame 71 is coupled with the brine tank 111 so that the radiation path from the photo emitting device 72 to the photo receiving device 73 crosses the internal space of the brine tank 111.

Preferably, the plug frame 71 of the electro-optical sensor 170 comprises a plate-shaped base, which is stably associate with the brine tank 111, whereas the optical interface means comprises two protrusions 87 and 88, which cantilevered extend from the inner surface 71a of the base of the plug frame 71 towards the internal space of brine tank 45 in order to be immersed in the brine. According to an exemplary embodiment illustrated in Figure 15, the protrusions 87 and 88 contain photo emitting device 72 and the photo receiving device 73 respectively. Protrusions 87 and 88 comprise respective external sidewalls 87a and 88a which separate the photo emitting device 72 and the photo receiving device 73 from the brine and when crossed by the radiation beam operates as an optical interface structure. It is pointed out that the cross-section of protrusions 87 and 88 may be of any kind except for their external sidewalls 87a and 88a which are placed in front of the photo emitting device 72 and the photo receiving device 73 and are preferably flat since they act as windows for the light. Preferably, the flat sidewalls 87a and 88a lies in respective plans which are perpendicular one to the other, and inclined/transversal to the radiation beam. Moreover, the flat sidewalls 87a and 88a usefully define a prefixed volume of brine which is crossed by the light beam.

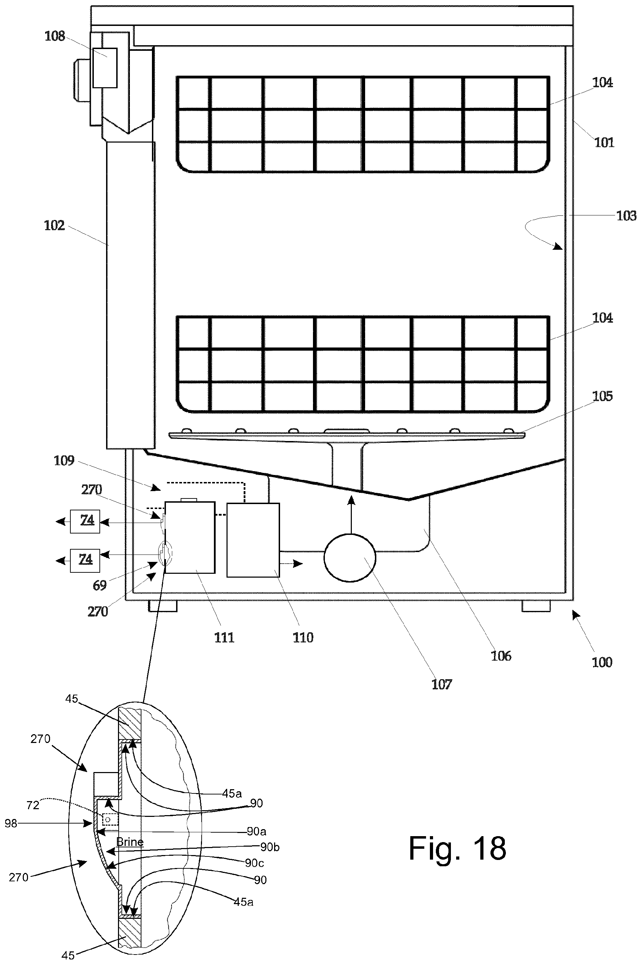

The example illustrated in Figure 18 relates to a dishwashing machine 100 wherein the sensor assembly 69 comprises at least one electro-optical sensor 270 which is identical to the plug electro-optical sensor 270 (illustrated in Figures 12-15) made according to the third embodiment and the component parts of which are indicated, with the same reference numbers which identify corresponding parts of the electro-optical sensor 270.

With reference to the example illustrated in Figure 18, the plug frame 71 of the electro-optical sensors 270 supports the photo emitting device 72 and the photo receiving device 73 outside of the brine tank 111 when the plug frame 71 is coupled with the brine tank 111, so that the radiation path from the photo emitting device 72 towards the photo receiving device 73 extends completely outside of the internal space of said brine tank 111. Preferably, the plug frame 71 of the electro-optical sensors 270 is shaped so as to comprise a inner cavity or hollow seat 90, which is hydraulically connected with the internal space of the brine tank 111, in order to receive a prefixed volume of brine.

With reference to Figure 18, the hollow seat 90 is defined by an inner brine sampling chamber which is formed on the plug frame 71, has an opening hydraulically connected with the internal space of the brine tank 111 through an opening, and extends in the body of the plug frame 71 in order to be crossed by the radiation path completely outside of the brine tank 111. The plug frame 71 comprises a plate-shaped base, which is stably associate with the brine tank 111, whereas the optical interface means comprises the protrusion 98, which cantilevered extends/protrudes from the outer surface of the base of the plug frame 71 in opposite direction to the brine tank 111. According to the example illustrated in Figure 18, the photo emitting device 72 and the photo receiving device 73 are supported by the plug frame 71 in order to be placed outside of the protrusion 98 sidewalls. The protrusion 98 presents inner sidewalls which delimits at least partially the hollow seat 90. Two adjacent sidewalls 98a and 98b of the protrusion 98 separate the photo emitting device 72 and the photo receiving device 73 from the brine contained in the recess 90 and when crossed by the radiation beam operates as an optical interface structure.

With regard to a preferred embodiment, the hollow seat 90 is formed on the body 75 in order to extend inside the protrusion 98. The hollow seat 90 is shaped in order to comprise an upper portion 90a, preferably, although not necessarily, a triangular shaped portion, arranged between said emitting device 72 and photo receiving device 73 so as to be crossed by the radiation beam, and a lower portion 90b which has inferiorly an inner side 90c inclined, i.e. downward slope, so as to conveniently cause the salt-drops, which tend to be formed on the inner surfaces of the hollow seat 90, to be drained downwards.

It is pointed out that the cross-section of protrusion 98 may be of any kind except for its inner sidewalls 98a and 98b which are placed in front of the photo emitting device 72 and the photo receiving device 73 and are preferably flat since they act as windows for the light/radiation beam. The characteristics of these flat inner sidewalls 98a, 98b in terms of extension, thickness, roughness, etc. depend on the optical characteristics of the emitting and receiving devices (beam geometrical aperture, intensity, wavelength, etc.) as well as on their reciprocal distance and alignment. According to a preferred embodiment, the flat sidewalls 87a and 88a lie in respective plans which are perpendicular one to the other, and inclined/transversal to the radiation beam. Preferably the sidewall 98a is formed on the plug frame 71 in order to be inclined to the emitting line/direction of the photo emitting element 72 at an angle greater than 60°, preferably greater than 61° with respect to the normal to the sidewall 98a. The emitting device 72 and the receiving device 73 are substantially aligned one to the other, i.e. the direction of the collimated light emitted by the photo emitting device 72 with respect to the normal to the sidewall 98a is approximately coaxial with the receiving device 73. However it should be pointed out that the sensitivity to the refracted-to-received light ratio at the receiving device 73 may be increased if the photo emitting device 72 is not aligned with the photo receiving device 73.

## Claims

1. A household washing machine (1)(100) comprising: an outer casing (2), a washing tub (3) which is placed inside said outer casing (2) and is designed to accommodate items to be washed during a wash cycle, an internal water softening device (13)(110) comprising a water softening agent capable of reducing the hardness degree of a fresh water to be supplied to said washing tub (3) during a washing cycle; a brine tank (45)(111) containing brine to be supplied to said water softening device (13)(110) for regenerating said water softening agent;
said washing machine (1)(100) further comprising at least a sensor assembly (69), which is provided with at least an electro-optical sensor (70)(170)(270) which is configured to determine the salinity of the brine contained in said brine tank (45) (111);
said electro-optical sensor (70)(170)(270) comprises:
an emitting device (72) for emitting a radiation beam,
a receiving device (73) for receiving said radiation beam, and
electronic control means (74) which are configured to receive an electrical signal from said receiving device (73) being indicative of the refraction index of the brine and determine the salinity of the brine on the basis of said determined refraction index;
**characterized in that** the electro-optical sensor (70)(170)(270) further comprises a plug frame (71) which is fitted into an opening (45a) formed on a wall of said brine tank (45); and optical interface means (75)(87a,88a)(98a,98b) which are associated with said plug frame (71) and are shaped in order to be at least partially in contact with said brine contained in said brine tank (45); said emitting device (72) and said receiving device (73) being stably incorporated/placed in said plug frame (71) in respective prefixed positions, one to the other, with respect to said optical interface means (75)(87,88)(98a,98b); and said optical interface means (75)(87a,88a)(98a,98b) being structured in order to be crossed by the radiation beam emitted from said emitting device (72) and provide to the receiving device (73) an amount of radiation beam which is indicative of the refraction index of said brine.

2. A washing machine according to claim 1, wherein said optical interface means comprise a waveguide body (75), which protrudes from said plug frame (71), across said opening (45a), towards the internal space of said brine tank (45) in order to extend at least partially in the internal space of brine tank (45).

3. A washing machine according to claim 2, wherein said waveguide body (75) is optically coupled with said emitting device (72) and said receiving device (73), said waveguide body (75) has an outer contact surface immersed in the brine, is structured in order to receive the emitted radiation beam from said emitting device (72) and provides the receiving device (73) an amount of radiation beam which is not refracted across the brine and is indicative of the refraction index of the brine.

4. A washing machine according to claim 3, wherein said waveguide body (75) comprises a solid semi-spherical calotte-shaped body.

5. A washing machine according to claims 2 or 3, wherein said waveguide body (75) comprises a solid ogival-shaped body which extends along a longitudinal axis (A) towards the internal space of said brine tank (45).

6. A washing machine according to claim 5, wherein said emitting device (72) is designed to emit said radiation beam along a direction about parallel to said longitudinal axis (A).

7. A washing machine according to anyone of the claims from 2 to 6, wherein said emitting device (72) and said receiving device (73) are placed in a supporting surface of said plug frame (71) and said waveguide body (75) comprises a base surface (76) which is stably fixed to said supporting surface of said plug frame (71) in order to face the emitting device (72) and the receiving device (73).

8. A washing machine according to claim 5 and 7, wherein said waveguide body (75) comprises a trimmed end (78) which is opposite to said base surface (76) along said axis (A), and has a substantially flat surface which lies in a plane perpendicular to said axis (A).

9. A washing machine according to anyone of the claims from 3 to 8, wherein said waveguide body (75) is made of a material being able to transmit radiation beam having prefixed frequencies and is **characterised by** a refraction index which causes said outer contact surface of the waveguide body (75), immersed in the brine, to reflect/refract the electromagnetic radiation towards said receiving device (73).

10. A washing machine according to claim 9, wherein the waveguide body (75) is made of polycarbonate or polypropylene.

11. A washing machine according to claim 1, wherein said optical interface means comprises two adjacent flat walls (87a,88a)(98a,98b) which are formed on said plug frame (71) and faced to said photo emitting device (72) and said photo receiving device (73) respectively in order to separate the latter from the brine, and be crossed from said radiation beam.

12. A washing machine according to claim 11, wherein said adjacent flat walls (87a,88a)(98a,98b) lie on respective planes being perpendicular one to the other.

13. A washing machine according to claim 12, wherein said adjacent flat walls (87a,88a)(98a,98b) lie on respective planes inclined to said beam path so that the light emitted by the photo emitting device (72) hits a flat wall (87a) with an angle greater than about 61°.

14. A washing machine according to anyone of the claims from 11 to 13, wherein said adjacent flat walls (87a,88a) are formed in respective protrusions (87)(88) extending from said plug frame (71) in order to be placed at least partially inside of the internal space of the brine tank (45)(111).

15. A washing machine according to claim 14, wherein said emitting device (72) and said receiving device (73) are arranged inside of said protrusions (87)(88).

16. A washing machine according to anyone of the claims from 11 to 13, wherein said plug frame (71) supports said photo emitting device (72) and said photo receiving device (73) so that the beam path from said photo emitting device (72) to said photo receiving device (73) remains outside of said brine tank wall, said plug frame (71) further comprises a inner hollow seat (90) which hydraulically communicates with the internal space of said brine tank (45) for receiving a prefixed volume of brine and is formed in the body of the plug frame (71) in order to be crossed by said beam path; said adjacent flat walls (98a,98b) delimiting said inner seat (90).

17. A washing machine according to anyone of the previous claims, wherein said electronic control means (74) are further configured to determine the level of the brine contained in the brine tank (45)(111) based on the electric signal provided by said photo receiving device (73).

18. A washing machine according to claim 17, wherein the sensor assembly (69) is associated with the brine tank (45)(111) along a portion corresponding to the predetermined brine level of the brine to be controlled/monitored.

19. A washing machine according to anyone of the previous claims, wherein said sensor assembly (69) comprise two electro-optical sensors (70) which are associated with the brine tank (45)(111) along a portion corresponding to two predetermined brine levels of the brine to be controlled/monitored.

20. A washing machine according to claim 19, wherein a first electro-optical sensor (70) is associated with the brine tank (45)(111) in order to determine whether the level of the water or brine stored inside brine tank (45)(111) is equal to or higher than a predetermined maximum threshold value (Lmax), whereas a second electro-optical sensor (70) is associated with the brine tank (45)(111) in order to determine whether the level of the water or brine stored inside brine tank (45)(111) is equal to or lower than a predetermined minimum threshold value (Lmin).

21. A washing machine according to anyone of the claims from 1 to 20, comprising a main electronic central control unit (95) which is configured to: receive the salinity determined by the sensor assembly (69), and alert to the user a lack of salt and/or that refilling of salt is requested based on said received salinity.

22. A washing machine according to anyone of the claims from 1 to 20, comprising a main electronic central control unit (95) which is configured to: receive the salinity determined by the sensor assembly (69), and determine, on the basis of said determined salinity, whether the brine contained into said tank (45)(111) and designed to be supplied into the water softening device (13) has a sufficient salinity degree to successfully perform the regeneration process of the ion-exchange resins contained into said water softening device (13).

23. A washing machine according to anyone of the claims from 1 to 20, comprising a main electronic central control unit (95) which is configured to: receive the determined salinity from the sensor assembly (69) and calculate a regeneration duration of said water softening device (13) based on the determined salinity.

24. A washing machine according to anyone of the claims from 1 to 20, provided with a salt compartment (21) containing salt grains (NaCl) to be used in the regeneration process of said water softening device (13)(110), and a main electronic central control unit (95) which is configured to receive the determined salinity from the sensor assembly (69) and determine, on the basis of the determined salinity, when the amount of salt grains (NaCl) stored into said compartment (21) is depleting.

25. A washing machine according to anyone of the claims from 1 to 20, provided with a salt compartment (21) containing salt grains (NaCl) to be used in the regeneration process of said water softening device (13)(110) and a main electronic central control unit (95) which is configured to receive the determined salinity from the sensor assembly (69) and determine, on the basis of the determined salinity, when the salt grains in the said compartment (21) form a compact block of salt difficult to be dissolved by the fresh water poured into the said compartment (21), and accordingly decide to stop or skip the regeneration process of said water softening device (13)(110).

26. A washing machine according to claim 24 or 25, wherein said salt compartment (21) is structured for being manually fillable with a given quantity of salt grains (NaCl) and is fluidically communicates with said brine tank (45).

27. A washing machine according to claim anyone of the claims from 1 to 20 comprising a main electronic central control unit (95) which is configured to receive the determined salinity from the sensor assembly (69) and determine, if the amount of salt (NaCl) to be supplied to said water softening device (13) for regenerating the said water softening device (13) is sufficient.

28. A washing machine according to anyone of the previous claims, comprising a rotatable drum housed in axially rotatable manner inside the washing tub (3) and structured for housing the laundry to be washed, a detergent dispenser (10) which is structured for supplying detergent into the washing tub (3), a fresh-water supply circuit (12) which is structured for selectively channelling a flow of fresh water from the water mains towards said detergent dispenser (10) and/or the washing tub (3), said internal water softening device (13) being filled with said water softening agent capable of reducing the hardness degree of the fresh water directed towards the detergent dispenser (10) or the washing tub (3), said brine tank (45) comprising an internal space containing brine to be supplied, on command, to said water softening device (13) for regenerating the said water softening device (13).

29. A washing machine according to anyone of the claims from 1 to 27, comprising one or more shelf or dish-rack baskets (104) which are housed inside the washing tub (103) and designed to to accommodate dishes to be washed during a washing cycle and one or more nozzles (105) rotatably installed in respective sides of the wash chamber tub (103) for spraying washing water through spraying holes.

30. A washing machine according to claim 5, wherein said waveguide body (75) comprises a solid ogival-shaped body presenting two flat sides (77c) lying in respective planes parallel one to the other and with the longitudinal axis (A) of the body (75).

31. A washing machine according to claim 16, wherein said hollow seat (90) comprise inferiorly an inner side (90c) downward inclined.

32. A washing machine according to claim 1 wherein said emitting device (72) and said receiving device (73) are stably incorporated/placed in said plug frame (71) in order to not be aligned one to the other.

## Patentansprüche

1. Haushaltswaschmaschine (1) (100), die Folgendes umfasst: ein Außengehäuse (2); einen Waschbottich (3), der im Inneren des Außengehäuses (2) angeordnet ist und ausgelegt ist, während eines Waschzyklus zu waschende Elemente aufzunehmen; eine interne Wasserenthärtungsvorrichtung (13) (110), die ein Wasserenthärtungsmittel umfasst, das den Härtegrad von Frischwasser verringern kann, das während eines Waschzyklus dem Waschbottich (3) zugeführt werden soll; einen Solebehälter (45) (111), der Sole enthält, die der Wasserenthärtungsvorrichtung (13) (110) zum Wiederaufbereiten des Wasserenthärtungsmittels zugeführt werden soll;
wobei die Waschmaschine (1) (100) ferner mindestens eine Sensoranordnung (69) umfasst, die mit mindestens einem elektrooptischen Sensor (70) (170) (270) versehen ist, der konfiguriert ist, den Salzgehalt der Sole zu bestimmen, die im Solebehälter (45) (111) enthalten ist;
wobei der elektrooptische Sensor (70) (170) (270) Folgendes umfasst:
eine Emittiervorrichtung (72) zum Emittieren eines Strahlungsbündels,
eine Empfangsvorrichtung (73) zum Empfangen des Strahlungsbündels, und
elektronische Steuermittel (74), die konfiguriert sind, ein elektrisches Signal von der Empfangsvorrichtung (73) zu empfangen, das den Brechungsindex der Sole angibt, und den Salzgehalt der Sole auf der Grundlage des bestimmten Brechungsindex i zu bestimmen;
**dadurch gekennzeichnet, dass** der elektrooptische Sensor (70) (170) (270) ferner einen Steckrahmen (71), der in eine Öffnung (45a) eingepasst ist, die auf einer Wand des Solebehälters (45) gebildet ist; und optische Schnittstellenmittel (75) (87a, 88a) (98a, 98b), die dem Steckrahmen (71) zugeordnet sind und derart geformt sind, dass sie sich zumindest teilweise mit der Sole, die in dem Solebehälter (45) enthalten ist, in Kontakt befinden, umfasst; wobei die Emittiervorrichtung (72) und die Empfangsvorrichtung (73) an jeweiligen vorab festgelegten Positionen in Bezug zueinander in Bezug auf die optischen Schnittstellenmittel (75) (87, 88) (98a, 98b) in dem Steckrahmen (71) stabil eingebaut/angeordnet sind; und die optischen Schnittstellenmittel (75) (87a, 88a) (98a, 98b) derart konstruiert sind, dass sie von dem Strahlungsbündel, das von der Emittiervorrichtung (72) emittiert wird, gekreuzt werden und der Empfangsvorrichtung (73) einen Betrag des Strahlungsbündels bereitstellen, der den Brechungsindex der Sole angibt.

2. Waschmaschine nach Anspruch 1, wobei die optischen Schnittstellenmittel einen Wellenleiterkörper (75) umfassen, der von dem Steckrahmen (71) quer zu der Öffnung (45a) in Richtung des Innenraums des Solebehälters (45) vorsteht, derart, dass er sich zumindest teilweise in den Innenraum des Solebehälters (45) erstreckt.

3. Waschmaschine nach Anspruch 2, wobei der Wellenleiterkörper (75) mit der Emittiervorrichtung (72) und der Empfangsvorrichtung (73) optisch gekoppelt ist, wobei der Wellenleiterkörper (75) eine äußere Kontaktfläche aufweist, die in der Sole versenkt ist, die derart konstruiert ist, dass sie das emittierte Strahlungsbündel von der Emittiervorrichtung (72) empfängt und der Empfangsvorrichtung (73) einen Betrag des Strahlungsbündels bereitstellt, der nicht quer zur Sole gebrochen wird und den Brechungsindex der Sole angibt.

4. Waschmaschine nach Anspruch 3, wobei der Wellenleiterkörper (75) einen festen, halbkugelförmigen, kalottenförmigen Körper umfasst.

5. Waschmaschine nach Anspruch 2 oder 3, wobei der Wellenleiterkörper (75) einen festen, spitzbogenförmigen Körper umfasst, der sich entlang einer Längsachse (A) in Richtung des Innenraums des Solebehälters (45) erstreckt.

6. Waschmaschine nach Anspruch 5, wobei die Emittiervorrichtung (72) ausgelegt ist, das Strahlungsbündel entlang einer Richtung zu emittieren, die in etwa zu der Längsachse (A) parallel ist.

7. Waschmaschine nach einem der Ansprüche von 2 bis 6, wobei die Emittiervorrichtung (72) und die Empfangsvorrichtung (73) in einer Trägerfläche des Steckrahmens (71) angeordnet sind und der Wellenkörper (75) eine Grundfläche (76) umfasst, die an der Trägerfläche des Steckrahmens (71) stabil befestigt ist, derart, dass sie der Emittiervorrichtung (72) und der Empfangsvorrichtung (73) zugewandt ist.

8. Waschmaschine nach Anspruch 5 und 7, wobei der Wellenleiterkörper (75) ein zugeschnittenes Ende (78) umfasst, das der Grundfläche (76) entlang der Achse (A) gegenüberliegt und eine im Wesentlichen ebene Fläche aufweist, die in einer Ebene liegt, die zur Achse (A) senkrecht ist.

9. Waschmaschine nach einem der Ansprüche von 3 bis 8, wobei der Wellenleiterkörper (75) aus einem Material hergestellt ist, das ein Strahlungsbündel übertragen kann, das vorab festgelegte Frequenzen aufweist, und durch einen Brechungsindex gekennzeichnet ist, der bewirkt, dass die äußere Kontaktfläche des Wellenleiterkörpers (75), die in der Sole versenkt ist, die elektromagnetische Strahlung in Richtung der Empfangsvorrichtung (73) reflektiert/bricht.

10. Waschmaschine nach Anspruch 9, wobei der Wellenleiterkörper (75) aus Polycarbonat oder Polypropylen hergestellt ist.

11. Waschmaschine nach Anspruch 1, wobei das optische Schnittstellenmittel zwei benachbarte ebene Wände (87a, 88a) (98a, 98b) umfasst, die auf dem Steckrahmen (71) gebildet sind und zur Lichtemittiervorrichtung (72) bzw. zur Lichtempfangsvorrichtung (73) orientiert sind, derart, dass sie Letztere von der Sole trennen und vom Strahlungsbündel gekreuzt werden.

12. Waschmaschine nach Anspruch 11, wobei die benachbarten ebenen Wände (87a, 88a) (98a, 98b) auf jeweiligen Ebenen liegen, die zueinander senkrecht sind.

13. Waschmaschine nach Anspruch 12, wobei die benachbarten ebenen Wände (87a, 88a) (98a, 98b) auf jeweiligen Ebenen liegen, die zum Strahlengang geneigt sind, derart, dass das Licht, das durch die Lichtemittiervorrichtung (72) emittiert wird, mit einem Winkel größer als etwa 61° auf eine ebene Wand (87a) trifft.

14. Waschmaschine nach einem der Ansprüche von 11 bis 13, wobei die benachbarten ebenen Wände (87a, 88a) in jeweiligen Vorsprüngen (87) (88) gebildet sind, die sich von dem Steckrahmen (71) erstrecken, derart, dass sie zumindest teilweise im Inneren des Innenraums des Solebehälters (45) (111) angeordnet sind.

15. Waschmaschine nach Anspruch 14, wobei die Emittiervorrichtung (72) und die Empfangsvorrichtung (73) im Inneren der Vorsprünge (87) (88) angeordnet sind.

16. Waschmaschine nach einem der Ansprüche von 11 bis 13, wobei der Steckrahmen (71) die Lichtemittiervorrichtung (72) und die Lichtempfangsvorrichtung (73) trägt, derart, dass der Strahlengang von der Lichtemittiervorrichtung (72) zur Lichtempfangsvorrichtung (73) außerhalb der Wand des Solebehälters bleibt, wobei der Steckrahmen (71) ferner einen hohlen Innensitz (90) umfasst, der zum Empfangen eines vorab festgelegten Volumens der Sole auf hydraulische Weise mit dem Innenraum des Solebehälters (45) in Verbindung steht und im Körper des Steckrahmens (71) derart ausgebildet ist, dass er vom Strahlengang gekreuzt wird; wobei die benachbarten, ebenen Wände (98a, 98b) den Innensitz (90) begrenzen.

17. Waschmaschine nach einem der vorhergehenden Ansprüche, wobei die elektronischen Steuermittel (74) ferner konfiguriert sind, auf der Grundlage des elektrischen Signals, das durch die Lichtempfangsvorrichtung (73) bereitgestellt wird, den Pegel der Sole, die im Solebehälter (45) (111) enthalten ist, zu bestimmen.

18. Waschmaschine nach Anspruch 17, wobei die Sensoranordnung (69) dem Solebehälter (45) (111) entlang eines Abschnitts zugeordnet ist, der dem vorgegebenen Solepegel der zu steuernden/überwachenden Sole entspricht.

19. Waschmaschine nach einem der vorhergehenden Ansprüche, wobei die Sensoranordnung (69) zwei elektrooptische Sensoren (70) umfasst, die dem Solebehälter (45) (111) entlang eines Abschnitts zugeordnet sind, der zwei vorgegebenen Solepegeln der zu steuernden/überwachenden Sole entspricht.

20. Waschmaschine nach Anspruch 19, wobei ein erster elektrooptischer Sensor (70) dem Solebehälter (45) (111) zugeordnet ist, um zu bestimmen, ob der Pegel des Wassers oder der Sole, das bzw. die im Inneren des Solebehälters (45) (111) gespeichert ist, größer oder gleich einem vorgegebenen maximalen Schwellenwert (Lmax) ist, während ein zweiter elektrooptischer Sensor (70) dem Solebehälter (45) (111) zugeordnet ist, um zu bestimmen, ob der Pegel des Wassers oder der Sole, das bzw. die im Inneren des Solebehälters (45) (111) gespeichert ist, kleiner oder gleich einem vorgegebenen minimalen Schwellenwert (Lmin) ist.

21. Waschmaschine nach einem der Ansprüche von 1 bis 20, die eine elektronische zentrale Hauptsteuereinheit (95) umfasst, die konfiguriert ist zum: Empfangen des Salzgehalts, der durch die Sensoranordnung (69) bestimmt wird, und Alarmieren des Anwenders über einen Mangel an Salz und/oder dass ein Wiederauffüllen von Salz erforderlich ist, auf der Grundlage des empfangenen Salzgehalts.

22. Waschmaschine nach einem der Ansprüche von 1 bis 20, die eine elektronische zentrale Hauptsteuereinheit (95) umfasst, die konfiguriert ist zum: Empfangen des Salzgehalts, der durch die Sensoranordnung (69) bestimmt wird, und Bestimmen auf der Grundlage des bestimmten Salzgehalts, ob die Sole, die in dem Behälter (45) (111) enthalten ist und ausgelegt ist, in die Wasserenthärtungsvorrichtung (13) zugeführt zu werden, einen ausreichenden Salzgehalt aufweist, um den Wiederaufbereitungsprozess der Ionenaustauschharze, die in der Wasserenthärtungsvorrichtung (13) enthalten sind, erfolgreich durchzuführen.

23. Waschmaschine nach einem der Ansprüche von 1 bis 20, die eine elektronische zentrale Hauptsteuereinheit (95) umfasst, die konfiguriert ist zum: Empfangen des bestimmten Salzgehalts von der Sensoranordnung (69) und Berechnen einer Wiederaufbereitungsdauer der Wasserenthärtungsvorrichtung (13) auf der Grundlage des bestimmten Salzgehalts.

24. Waschmaschine nach einem der Ansprüche von 1 bis 20, die mit einem Salzfach (21), das Salzkörner (NaCl) enthält, die in dem Wiederaufbereitungsprozess der Wasserenthärtungsvorrichtung (13) (110) verwendet werden sollen, und einer elektronischen zentralen Hauptsteuereinheit (95), die konfiguriert ist, den bestimmten Salzgehalt von der Sensoranordnung (69) zu empfangen und auf der Grundlage des bestimmten Salzgehalts zu bestimmen, wenn die Menge der Salzkörner (NaCl), die in dem Fach (21) gespeichert sind, abnimmt, versehen ist.

25. Waschmaschine nach einem der Ansprüche von 1 bis 20, die mit einem Salzfach (21), das Salzkörner (NaCl) enthält, die in dem Wiederaufbereitungsprozess der Wasserenthärtungsvorrichtung (13) (110) verwendet werden sollen, und einer elektronischen zentralen Hauptsteuereinheit (95), die konfiguriert ist, den bestimmten Salzgehalt von der Sensoranordnung (69) zu empfangen und auf der Grundlage des bestimmten Salzgehalts zu bestimmen, wenn die Salzkörner in dem Fach (21) einen kompakten Block aus Salz bilden, der durch das Frischwasser, das in das Fach (21) gegossen wird, schwer aufgelöst werden kann, und dementsprechend zu entscheiden, den Wiederaufbereitungsprozess der Wasserenthärtungsvorrichtung (13) (110) anzuhalten oder zu überspringen, versehen ist.

26. Waschmaschine nach Anspruch 24 oder 25, wobei das Salzfach (21) konstruiert ist, auf manuelle Weise mit einer gegebenen Menge von Salzkörnern (NaCl) befüllt werden zu können, und mit dem Solebehälter (45) fluidtechnisch in Verbindung steht.

27. Waschmaschine nach einem der Ansprüche von 1 bis 20, die eine elektronische zentrale Hauptsteuereinheit (95) umfasst, die konfiguriert ist, den bestimmten Salzgehalt von der Sensoranordnung (69) zu empfangen und zu bestimmen, ob die Menge des Salzes (NaCl), das der Wasserenthärtungsvorrichtung (13) zum Wiederaufbereiten der Wasserenthärtungsvorrichtung (13) zugeführt werden soll, ausreichend ist.

28. Waschmaschine nach einem der vorhergehenden Ansprüche, die eine drehbare Trommel, die auf axial drehbare Weise im Inneren des Waschbottichs (3) aufgenommen ist und zum Aufnehmen der zu waschenden Wäsche konstruiert ist; eine Waschmittelabgabeeinrichtung (10), die zum Zuführen von Waschmittel in den Waschbottich (3) konstruiert ist; einen Frischwasserzuführkreislauf (12), der zum wahlweisen Leiten eines Stromes Frischwasser aus dem Wasserversorgungsnetz in Richtung der Waschmittelabgabeeinrichtung (10) und/oder des Waschbottichs (3) konstruiert ist; umfasst, wobei die interne Wasserenthärtungsvorrichtung (13) mit dem Wasserenthärtungsmittel gefüllt ist, das den Härtegrad des Frischwassers, das in Richtung der Waschmittelabgabeeinrichtung (10) oder des Waschbottichs (3) geleitet wird, verringern kann, wobei der Solebehälter (45) einen Innenraum umfasst, der Sole enthält, die auf Anweisung der Wasserenthärtungsvorrichtung (13) zum Wiederaufbereiten der Wasserenthärtungsvorrichtung (13) zugeführt werden soll.

29. Waschmaschine nach einem der Ansprüche von 1 bis 27, die einen oder mehrere Fachboden- oder Abtropfbrettkörbe (104), die im Inneren des Waschbottichs (103) aufgenommen sind und ausgelegt sind, Geschirr aufzunehmen, das während eines Waschzyklus gewaschen werden soll; und eine oder mehrere Düsen (105), die zum Sprühen von Waschwasser durch Sprühlöcher in den jeweiligen Seiten des Waschkammerbottichs (103) auf drehbare Weise eingebaut sind; umfasst.

30. Waschmaschine nach Anspruch 5, wobei der Wellenleiterkörper (75) einen festen, spitzbogenförmigen Körper umfasst, der zwei ebene Seiten (77c) aufweist, die in jeweiligen Ebenen liegen, die zueinander und zur Längsachse (A) des Körpers (75) parallel sind.

31. Waschmaschine nach Anspruch 16, wobei der hohle Sitz (90) unten eine Innenseite (90c), die nach unten geneigt ist, aufweist.

32. Waschmaschine nach Anspruch 1, wobei die Emittiervorrichtung (72) und die Empfangsvorrichtung (73) in dem Steckrahmen (71) stabil eingebaut/angeordnet sind, derart, dass sie nicht aufeinander ausgerichtet sind.

## Revendications

1. Machine à laver domestique (1) (100) comprenant : une carcasse extérieure (2), une cuve de lavage (3) qui est placée à l'intérieur de ladite carcasse extérieure (2) et qui est conçue pour recevoir des articles à laver pendant un cycle de lavage, un dispositif interne d'adoucissement d'eau (13) (110) comprenant un adoucisseur d'eau capable de réduire le degré de dureté d'une eau douce à fournir à ladite cuve de lavage (3) pendant un cycle de lavage ; un réservoir de saumure (45) (111) contenant de la saumure à fournir audit dispositif d'adoucissement d'eau (13) (110) pour régénérer ledit adoucisseur d'eau ;
ladite machine à laver (1) (100) comprenant en outre au moins un ensemble capteur (69) qui est muni d'au moins un capteur électro-optique (70) (170) (270) qui est configuré pour déterminer la salinité de la saumure contenue dans ledit réservoir de saumure (45) (111) ;
ledit capteur électro-optique (70) (170) (270) comprenant : un dispositif émetteur (72) pour émettre un faisceau de rayonnement ; un dispositif récepteur (73) pour recevoir ledit faisceau de rayonnement ; et des moyens de contrôle électroniques (74) qui sont configurés pour recevoir, en provenance dudit dispositif récepteur (73), un signal électrique indiquant l'indice de réfraction de la saumure et pour déterminer la salinité de la saumure sur la base dudit indice de réfraction déterminé ;
la machine à laver domestique étant **caractérisée en ce que** le capteur électro-optique (70) (170) (270) comprend en outre une structure de bouchon (71) qui est montée dans une ouverture (45a) formée sur une paroi dudit réservoir de saumure (45) ; et
des moyens formant interface optique (75) (87a, 88a) (98a, 98b) qui sont associés à ladite structure de bouchon (71) et qui présentent une forme pour être au moins en partie en contact avec ladite saumure contenue dans ledit réservoir de saumure (45) ; ledit dispositif émetteur (72) et ledit dispositif récepteur (73) étant intégrés/placés de façon stable dans ladite structure de bouchon (71) dans des positions respectives fixées au préalable, l'une à côté de l'autre, par rapport auxdits moyens formant interface optique (75) (87, 88) (98a, 98b) ; et lesdits moyens formant interface optique (75) (87a, 88a) (98a, 98b) étant structurés afin d'être traversés par le faisceau de rayonnement émis par ledit dispositif émetteur (72) de fournir au dispositif récepteur (73) une quantité du faisceau de rayonnement qui indique l'indice de réfraction de ladite saumure.

2. Machine à laver selon la revendication 1, dans laquelle lesdits moyens formant interface optique comprennent un corps de guide d'ondes (75) qui fait saillie par rapport à ladite structure de bouchon (71), à travers ladite ouverture (45a), vers l'espace interne dudit réservoir de saumure (45) afin de s'étendre au moins en partie dans l'espace interne du réservoir de saumure (45).

3. Machine à laver selon la revendication 2, dans laquelle ledit corps de guide d'ondes (75) est couplé optiquement audit dispositif émetteur (72) et audit dispositif récepteur (73), ledit corps de guide d'ondes (75) a une surface de contact externe immergée dans la saumure, est structuré afin de recevoir le faisceau de rayonnement émis par ledit dispositif émetteur (72) et fournit au dispositif récepteur (73) une quantité du faisceau de rayonnement qui n'est pas réfractée à travers la saumure et qui indique l'indice de réfraction de la saumure.

4. Machine à laver selon la revendication 3, dans laquelle ledit corps de guide d'ondes (75) comprend un corps plein semi-sphérique en forme de calotte.

5. Machine à laver selon la revendication 2 ou 3, dans laquelle ledit corps d'ondes (75) comprend un corps plein en forme d'ogive qui s'étend suivant un axe longitudinal (A) vers l'espace interne dudit réservoir de saumure (45).

6. Machine à laver selon la revendication 5, dans laquelle ledit dispositif d'émission (72) est conçu pour émettre ledit faisceau de rayonnement suivant une direction environ parallèle audit axe longitudinal (A).

7. Machine à laver selon l'une quelconque des revendications 2 à 6, dans laquelle ledit dispositif émetteur (72) et ledit dispositif récepteur (73) sont placés dans une surface de support de ladite structure de bouchon (71) et ledit corps de guide d'ondes (75) comprend une surface de base (76) qui est fixée de façon stable à ladite surface de support de ladite structure de bouchon (71) afin d'être en regard du dispositif émetteur (72) et du dispositif récepteur (73).

8. Machine à laver selon la revendication 5 et 7, dans laquelle ledit corps de guide d'ondes (75) comprend une extrémité coupée (78) qui est opposée à ladite surface de base (76) suivant ledit axe (A) et a une surface sensiblement plane qui repose dans un plan perpendiculaire audit axe (A).

9. Machine à laver selon l'une quelconque des revendications 3 à 8, dans laquelle ledit corps de guide d'ondes (75) est fabriqué dans un matériau qui est capable de transmettre un faisceau de rayonnement ayant des fréquences fixées au préalable et qui est **caractérisé par** un indice de réfraction qui amène ladite surface de contact externe du corps de guide d'ondes (75), immergée dans la saumure, à réfléchir/réfracter le rayonnement électromagnétique vers ledit dispositif récepteur (73).

10. Machine à laver selon la revendication 9, dans laquelle le corps de guide d'ondes (75) est fabriqué en polycarbonate ou en polypropylène.

11. Machine à laver selon la revendication 1, dans laquelle lesdits moyens formant interface optique comprennent deux parois planes adjacentes (87a, 88a) (98a, 98b) qui sont formées sur ladite structure de bouchon (71) et qui sont respectivement en regard dudit dispositif photoémetteur (72) et dudit dispositif photorécepteur (73) afin de séparer ce dernier de la saumure et d'être traversées par ledit faisceau de rayonnement.

12. Machine à laver selon la revendication 11, dans laquelle lesdites parois planes adjacentes (87a, 88a) (98a, 98b) reposent sur des plans respectifs qui sont perpendiculaires l'un par rapport à l'autre.

13. Machine à laver selon la revendication 12, dans laquelle lesdites parois planes adjacentes (87a, 88a) (98a, 98b) reposent sur des plans respectifs inclinés par rapport audit trajet de faisceau de sorte que la lumière émise par le dispositif photoémetteur (72) frappe une paroi plane (87a) avec un angle supérieur à environ 61°.

14. Machine à laver selon l'une quelconque des revendications 11 à 13, dans laquelle lesdites parois planes adjacentes (87a, 88a) sont formées dans des protubérances respectives (87) (88) s'étendant depuis ladite structure de bouchon (71) afin d'être placées au moins en partie à l'intérieur de l'espace interne du réservoir de saumure (45) (111).

15. Machine à laver selon la revendication 14, dans laquelle ledit dispositif émetteur (72) et ledit dispositif récepteur (73) sont agencés à l'intérieur desdites protubérances (87) (88).

16. Machine à laver selon l'une quelconque des revendications 11 à 13, dans laquelle ladite structure de bouchon (71) supporte ledit dispositif photoémetteur (72) et ledit dispositif photorécepteur (73) de sorte que le trajet de faisceau dudit dispositif photoémetteur (72) audit dispositif photorécepteur (73) reste à l'extérieur de ladite paroi de réservoir de saumure, ladite structure de bouchon (71) comprend en outre un siège creux interne (90) qui communique hydrauliquement avec l'espace interne dudit réservoir de saumure (45) pour recevoir un volume de saumure fixé au préalable et qui est formé dans le corps de la structure de bouchon (71) afin d'être traversé par ledit trajet de faisceau ; lesdites parois planes adjacentes (98a, 98b) délimitant ledit siège interne (90).

17. Machine à laver selon l'une quelconque des revendications précédentes, dans laquelle lesdits moyens de contrôle électroniques (74) sont en outre configurés pour déterminer le niveau de saumure contenu dans le réservoir de saumure (45) (111) sur la base du signal électrique fourni par ledit dispositif photorécepteur (73).

18. Machine à laver selon la revendication 17, dans laquelle l'ensemble capteur (69) est associé au réservoir de saumure (45) (111) suivant une partie correspondant au niveau de saumure prédéterminé de la saumure à contrôler/surveiller.

19. Machine à laver selon l'une quelconque des revendications précédentes, dans laquelle ledit ensemble capteur (69) comprend deux capteurs électro-optiques (70) qui sont associés au réservoir de saumure (45) (111) suivant une partie correspondant à deux niveaux de saumure prédéterminés de la saumure à contrôler/surveiller.

20. Machine à laver selon la revendication 19, dans laquelle un premier capteur électro-optique (70) est associé au réservoir de saumure (45) (111) afin de déterminer si le niveau de l'eau ou de la saumure stockée à l'intérieur du réservoir de saumure (45) (111) est supérieur ou égal à une valeur-seuil maximale prédéterminée (Lmax), tandis qu'un second capteur électro-optique (70) est associé au réservoir de saumure (45) (111) afin de déterminer si le niveau de l'eau ou de la saumure stockée à l'intérieur du réservoir de saumure (45) (111) est inférieur ou égal à une valeur-seuil minimale prédéterminée (Lmin).

21. Machine à laver selon l'une quelconque des revendications 1 à 20, comprenant une unité de contrôle centrale électronique principale (95) qui est configurée pour : recevoir la salinité déterminée par l'ensemble capteur (69) et alerter l'utilisateur d'un manque de sel et/ou qu'un remplissage de sel est requis sur la base de ladite salinité reçue.

22. Machine à laver selon l'une quelconque des revendications 1 à 20, comprenant une unité de contrôle centrale électronique principale (95) qui est configurée pour : recevoir la salinité déterminée par l'ensemble capteur (69) et déterminer, sur la base de ladite salinité déterminée, si la saumure contenue dans ledit réservoir (45) (111) et destinée à être fournie au dispositif d'adoucissement d'eau (13) a un degré de salinité suffisant pour réaliser de manière satisfaisante le processus de régénération des résines d'échange d'ions contenues dans ledit dispositif d'adoucissement d'eau (13).

23. Machine à laver selon l'une quelconque des revendications 1 à 20, comprenant une unité de contrôle centrale électronique principale (95) qui est configurée pour : recevoir la salinité déterminée en provenance de l'ensemble capteur (69) et calculer une durée de régénération dudit dispositif d'adoucissement d'eau (13) sur la base de la salinité déterminée.

24. Machine à laver selon l'une quelconque des revendications 1 à 20, munie d'un compartiment de sel (21) contenant des grains de sel (NaCl) destinés à être utilisés dans le processus de régénération dudit dispositif d'adoucissement d'eau (13) (110) et d'une unité de contrôle centrale électronique principale (95) qui est configurée pour recevoir la salinité déterminée en provenance de l'ensemble capteur (69) et déterminer, sur la base de la salinité déterminée, quand la quantité de grains de sel (NaCl) stockée dans ledit compartiment (21) est épuisée.

25. Machine à laver selon l'une quelconque des revendications 1 à 20, munie d'un compartiment de sel (21) contenant des grains de sel (NaCl) destinés à être utilisés dans le processus de régénération dudit dispositif d'adoucissement d'eau (13) (110) et d'une unité de contrôle centrale électronique principale (95) qui est configurée pour recevoir la salinité déterminée en provenance de l'ensemble capteur (69) et déterminer, sur la base de la salinité déterminée, quand les grains de sel dans ledit compartiment (21) forment un bloc de sel compact difficile à dissoudre par l'eau douce versée dans ledit compartiment (21), et décider en conséquence d'arrêter ou d'ignorer le processus de régénération dudit dispositif d'adoucissement d'eau (13) (110).

26. Machine à laver selon la revendication 24 ou 25, dans laquelle ledit compartiment de sel (21) est structuré pour être remplissable manuellement avec une quantité donnée de grains de sel (NaCl) et communique fluidiquement avec ledit réservoir de saumure (45).

27. Machine à laver selon l'une quelconque des revendications 1 à 20, comprenant une unité de contrôle centrale électronique principale (95) qui est configurée pour recevoir la salinité déterminée en provenance de l'ensemble capteur (69) et déterminer si la quantité de sel (NaCl) à fournir audit dispositif d'adoucissement d'eau (13) pour régénérer ledit dispositif d'adoucissement d'eau (13) est suffisante.

28. Machine à laver selon l'une quelconque des revendications précédentes, comprenant un tambour rotatif logé axialement rotatif à l'intérieur de la cuve de lavage (3) et structuré pour loger le linge à laver, un distributeur de détergent (10) qui est structuré pour fournir du détergent dans la cuve de lavage (3), un circuit d'alimentation en eau douce (12) qui est structuré pour canaliser de manière sélective un courant d'eau douce du réseau de distribution d'eau vers le distributeur de détergent (10) et/ou la cuve de lavage (3), ledit dispositif interne d'adoucissement d'eau (13) étant rempli avec ledit adoucisseur d'eau capable de réduire le degré de dureté de l'eau douce dirigée vers le distributeur de détergent (10) ou la cuve de lavage (3), ledit réservoir de saumure (45) comprenant un espace interne contenant de la saumure destinée à être fournie, sur commande, audit dispositif d'adoucissement d'eau (13) pour régénérer ledit dispositif d'adoucissement d'eau (13).

29. Machine à laver selon l'une quelconque des revendications 1 à 27, comprenant un ou plusieurs paniers ou clayettes à vaisselle (104), qui sont logés à l'intérieur de la cuve de lavage (103) et qui sont conçus pour recevoir de la vaisselle à laver pendant un cycle de lavage, et une ou plusieurs buses (105) installées rotatives au niveau de côtés respectifs de la cuve de lavage (103) pour pulvériser de l'eau de lavage par des orifices de pulvérisation.

30. Machine à laver selon la revendication 5, dans laquelle ledit corps d'ondes (75) comprend un corps plein en forme d'ogive présentant deux côtés plats (77c) reposant dans des plans respectifs parallèles l'un par rapport à l'autre et à l'axe longitudinal (A) du corps (75).

31. Machine à laver selon la revendication 16, dans laquelle ledit siège creux (90) comprend en bas un côté interne (90c) incliné vers le bas.

32. Machine à laver selon la revendication 1, dans laquelle ledit dispositif émetteur (72) et ledit dispositif récepteur (73) sont intégrés/placés de façon stable dans ladite structure de bouchon (71) de manière à ne pas être alignés l'un par rapport à l'autre.
